(19) **Europäisches Patentamt / European Patent Office / Office européen des brevets**

(11) **EP 3 440 443 B1**

(12) **FASCICULE DE BREVET EUROPEEN**

(45) Date de publication et mention
de la délivrance du brevet:
**28.09.2022 Bulletin 2022/39**

(21) Numéro de dépôt: **17720192.8**

(22) Date de dépôt: **03.04.2017**

(51) Classification Internationale des Brevets (IPC):
**G01J 3/28** *(2006.01)*    **G01J 3/44** *(2006.01)*
**G01N 21/65** *(2006.01)*    **G01J 3/02** *(2006.01)*

(52) Classification Coopérative des Brevets (CPC):
**G01J 3/2823; G01J 3/027; G01J 3/2803;
G01J 3/44; G01N 21/6458; G01N 21/65;
G06T 3/4061;** G01J 2003/2813; G01J 2003/2826

(86) Numéro de dépôt international:
**PCT/FR2017/050780**

(87) Numéro de publication internationale:
**WO 2017/174915 (12.10.2017 Gazette 2017/41)**

(54) **PROCÉDÉ D'ACQUISITION ET DE FORMATION D'UNE IMAGE DE SPECTROMÉTRIE PAR UN ÉCHANTILLONNAGE SPATIAL ADAPTÉ**

VERFAHREN ZUR ERFASSUNG UND HERSTELLUNG EINES SPEKTROMETRIEBILDES DURCH ANGEPASSTE RÄUMLICHE ABTASTUNG

METHOD FOR ACQUIRING AND FORMING A SPECTROMETRY IMAGE BY ADAPTED SPATIAL SAMPLING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.04.2016 FR 1653063**

(43) Date de publication de la demande:
**13.02.2019 Bulletin 2019/07**

(73) Titulaire: **Horiba France SAS
91120 Palaiseau (FR)**

(72) Inventeurs:
- **RICHARD, Simon
  91120 Palaiseau (FR)**
- **LADEN, Sébastien
  59910 Bondues (FR)**
- **KOUZNETSOV, Dmitri
  91120 Palaiseau (FR)**

(74) Mandataire: **Jacobacci Coralis Harle
32, rue de l'Arcade
75008 Paris (FR)**

(56) Documents cités:
**WO-A1-2014/147416     US-B1- 7 283 684**

- **Valérie Perrier: "Application de la théorie des ondelettes *", , 14 mars 2005 (2005-03-14), XP055331294, Extrait de l'Internet: URL:http://www-ljk.imag.fr/membres/Valerie .Perrier/PUBLI/Cours4-VP.pdf [extrait le 2016-12-22]**
- **MAIDER VIDAL ET AL: "Pre-processing of hyperspectral images. Essential steps before image analysis", CHEMOMETRICS AND INTELLIGENT LABORATORY SYSTEMS, vol. 117, 1 août 2012 (2012-08-01), pages 138-148, XP055331442, NL ISSN: 0169-7439, DOI: 10.1016/j.chemolab.2012.05.009**

EP 3 440 443 B1

**Description**

DOMAINE TECHNIQUE AUQUEL SE RAPPORTE L'INVENTION

La présente invention concerne de manière générale le domaine des méthodes et instruments d'acquisition d'image spectrale ou hyperspectrale d'un échantillon, basés sur l'utilisation de techniques de mesures point par point de spectrométrie Raman, de fluorescence, de photoluminescence ou de cathodo-luminescence et de reconstruction d'image point par point.

Elle concerne plus particulièrement une méthode d'acquisition et de formation, point par point, d'une image spectrale, hyperspectrale ou d'une image spectrométrique d'un échantillon.

Elle concerne en particulier une méthode pour l'acquisition et la reconstruction rapide d'une image d'un échantillon en micro-spectrométrie Raman, l'image de haute résolution spatiale étant formée point par point.

ARRIERE-PLAN TECHNOLOGIQUE

Une mesure ponctuelle de spectrométrie suffit en général pour l'analyse d'un échantillon spatialement homogène. Par contre, dans le cas d'un échantillon spatialement inhomogène, il est souhaitable d'effectuer des mesures de spectrométrie sous forme d'image construite point par point avec une résolution spatiale adaptée en fonction de la structure ou des microstructures de l'échantillon.

On connaît différentes techniques d'imagerie par spectrométrie, basées sur l'acquisition point par point de spectres et sur la reconstruction d'une image de spectrométrie résolue spatialement. Ces systèmes nécessitent un déplacement de l'échantillon par rapport à l'instrument de mesure et à un faisceau d'excitation focalisé en un point, ou un balayage du faisceau d'excitation par rapport à l'échantillon, ou encore une combinaison d'un balayage du faisceau et d'un déplacement de l'échantillon.

Dans un système d'imagerie de micro-spectrométrie Raman basé sur un déplacement de l'échantillon, l'échantillon est placé sur une platine motorisée ou munie d'actionneurs piézo-électriques, pour déplacer l'échantillon suivant deux directions transverses (XY). Le faisceau d'excitation laser est focalisé sur l'échantillon, sur une zone d'environ 1 micromètre de diamètre. Le déplacement de l'échantillon suit généralement une grille périodique ayant un pas constant en X et en Y. Un spectre est acquis à chaque nouvelle position de l'échantillon. Un logiciel de traitement reconstruit une image hyperspectrale à partir de cet ensemble de mesures.

On connaît aussi du document de brevet EP1983332A un procédé d'imagerie spectroscopique et un système d'exploration par balayage de la surface d'un échantillon fixe. Le document EP1983332A décrit un appareil d'imagerie spectroscopique comprenant un dispositif de balayage, aussi appelé scanner, pour explorer la surface d'un échantillon fixe par déplacement angulaire d'un faisceau d'excitation laser suivant deux directions transverses. Plus précisément, le document EP1983332A décrit un dispositif de balayage placé dans le tube d'un microscope confocal de manière à être inséré entre l'objectif de microscope et le filtre d'injection-réjection d'un spectromètre Raman. Le dispositif de balayage fonctionne dans un sens pour déplacer angulairement le faisceau laser d'excitation de manière à le positionner en différents points de la surface de l'échantillon. Par retour inverse de la lumière, ce dispositif de balayage fonctionne dans le sens inverse pour collecter un faisceau de rétro-diffusion Raman et le transmettre en direction d'un système de détection, par exemple un spectromètre Raman. Cet appareil permet d'acquérir point par point une image de spectrométrie Raman d'une portion de la surface d'un échantillon avec une résolution d'environ 50x50 points en une dizaine de minutes. Un changement de grossissement de l'objectif de microscope permet de modifier l'étendue de la surface balayée sur l'échantillon.

D'autres documents de brevet décrivent des appareils d'imagerie par micro-spectrométrie à balayage de faisceau (voir par exemple WO 2010/069987, US 2005/128476 ou JP 2001 091848).

Quel que soit le type de déplacement choisi, la durée d'acquisition d'une image point par point est déterminée par la durée d'acquisition de chaque point et par le nombre de points de l'image. La durée d'acquisition de chaque point est liée à la luminosité et à la résolution spectrale de chaque point. Le nombre de points de l'image dépend du pas de déplacement de l'échantillon par rapport au faisceau d'excitation ou de ce faisceau par rapport à l'échantillon qui détermine la résolution spatiale de l'image.

L'acquisition d'un seul spectre Raman prend généralement entre 0.1 ms à 1 minute, et en moyenne 1 seconde. Pour obtenir une image de haute résolution spatiale et spectrale, la durée d'acquisition d'une image de microspectrométrie Raman peut atteindre plusieurs heures ou même plusieurs dizaines d'heures. Ces durées sont inadaptées pour l'analyse de nombreux échantillons.

Les principales options pour réduire la durée d'acquisition d'image de spectrométrie sont la réduction de la durée d'acquisition de chaque point et la réduction du nombre de points dans une image. Toutefois, ces options conduisent généralement à une perte de qualité de l'image reconstruite, une diminution du rapport signal à bruit de chaque point et/ou une diminution de la résolution spatiale de l'image reconstruite.

Dans certaines applications, il est souhaitable de réduire la durée d'acquisition d'une image de microspectrométrie ou d'une image hyperspectrale sans perte de luminosité, de rapport signal à bruit, de résolution spectrale ni de résolution spatiale sur l'image reconstruite point par point.

Dans d'autres applications, il est souhaitable d'augmenter la résolution spatiale d'une image hyperspectrale ou d'une image de microspectrométrie sans augmenter la durée d'acquisition de cette image.

OBJET DE L'INVENTION

Afin de remédier à l'inconvénient précité de l'état de la technique, la présente invention propose un procédé d'acquisition et de formation point par point d'une image de spectrométrie d'un échantillon, le procédé comprenant les étapes suivantes :

a) acquisition numérique d'une image structurelle initiale d'une zone de l'échantillon, l'image structurelle initiale comportant des pixels disposés en lignes et en colonnes ;

b) traitement numérique de l'image structurelle initiale pour décomposer ladite image structurelle initiale en au moins un premier bloc de pixels associé à un premier pas d'échantillonnage spatial et un deuxième bloc de pixels associé à un deuxième pas d'échantillonnage spatial, le premier pas d'échantillonnage spatial étant supérieur au deuxième pas d'échantillonnage spatial, de manière à déterminer un échantillonnage spatial multi-échelle de ladite zone de l'échantillon ;

c) détermination d'une pluralité de positions de mesure de spectrométrie sur ladite zone de l'échantillon, en fonction de l'échantillonnage spatial multi-échelle déterminé à l'étape b) ;

d) successivement, pour chaque position de mesure de spectrométrie de la pluralité de positions de mesure de spectrométrie déterminées à l'étape c), positionnement d'un faisceau d'excitation en une position de mesure de spectrométrie et acquisition d'une mesure de spectrométrie pour ladite position de mesure de spectrométrie ;

e) reconstruction point par point d'une image de spectrométrie, chaque point de l'image de spectrométrie reconstruite étant obtenu à partir d'une ou plusieurs mesures de spectrométrie acquises à l'étape d).

Dans le présent document, on entend par « composante image » ou, de manière équivalente « composante », un tableau numérique par exemple sous forme de matrice, comprenant une ou plusieurs valeurs numériques obtenues suite à un traitement numérique de l'image structurelle initiale. La somme du nombre de valeurs numériques non nulles contenues dans la totalité des composantes d'ordre un d'une image reste inférieure ou égale au nombre de pixels de l'image structurelle initiale.

Plus généralement, on entend par composante d'ordre N, un tableau numérique par exemple sous forme de matrice, comprenant une ou plusieurs valeurs numériques obtenues suite à un traitement numérique d'une composante d'ordre N-1. De manière analogue, la somme du nombre de valeurs numériques non nulles contenues dans la totalité des composantes d'ordre N reste inférieure ou égale la somme du nombre de valeurs numériques non nulles contenues dans la composante d'ordre N-1 dont les composantes d'ordre N sont dérivées.

Le procédé de traitement d'une image structurelle de l'échantillon permet de déterminer les positions sur l'échantillon où effectuer les mesures ponctuelles afin d'obtenir la résolution spatiale locale la plus appropriée en fonction de la structure de cette zone de l'échantillon.

De façon avantageuse, l'étape b) comprend une étape de décomposition en ondelettes de l'image structurelle initiale, ou une étape de recherche de contours dans l'image structurelle initiale ou une étape de recherche de formes dans l'image structurelle initiale.

De manière préférée, l'étape b) comprend une étape b1) de décomposition en ondelettes de l'image structurelle initiale en une première, deuxième, troisième et quatrième composantes d'ordre un, chaque composante d'ordre un ayant un nombre de pixels égal au quart du nombre de pixels de l'image structurelle initiale, la première composante d'ordre un représentant les basses fréquences spatiales de l'image structurelle initiale, la deuxième composante d'ordre un représentant les variations horizontales de l'image structurelle initiale, la troisième composante d'ordre un représentant les variations verticales de l'image structurelle initiale et la quatrième composante d'ordre un représentant les variations diagonales de l'image structurelle initiale, et une étape de filtrage de la deuxième, et respectivement troisième, quatrième, composante d'ordre un par seuillage des variations, pour former une deuxième, et respectivement troisième, quatrième, composante filtrée d'ordre un,

- l'étape c) comprend une étape c1) de détermination d'une pluralité de positions de mesure de spectrométrie sur ladite zone de l'échantillon, en fonction des valeurs des deuxième, troisième et quatrième composantes filtrées d'ordre un déterminées à l'étape b1) ; et
- à l'étape e) chaque point de l'image de spectrométrie reconstruite est obtenu par une combinaison linéaire des mesures de spectrométrie acquises à l'étape d).

Selon un aspect particulier et avantageux, le procédé comprend des étapes supplémentaires suite à l'étape b1) de décomposition de l'image structurelle initiale en une première, deuxième, troisième et quatrième composantes d'ordre un et avant l'étape d) de mesure de spectrométrie et l'étape e) de reconstruction, dans lequel les étapes bN) à cN) sont itérées de 2 à N, et dans lequel les étapes dN) à eN) sont itérées de N à 2 où N représente un nombre entier naturel supérieur ou égal à deux et inférieur ou égal à m pour une image structurelle initiale de 2m x 2m pixels :

bN) décomposition de la première composante d'ordre N-1 en une première, deuxième, troisième et quatrième composantes d'ordre N, la première composante d'ordre N représentant les basses fréquences spatiales de la première composante d'ordre N-1, la deuxième composante d'ordre N représentant les variations horizontales de la première composante d'ordre N-1, la troisième composante d'ordre N représentant les variations verticales de la première composante d'ordre N-1 et la quatrième composante d'ordre N représentant les variations diagonales de la première composante d'ordre N-1, et filtrage de la deuxième, et respectivement troisième, quatrième, composante d'ordre N par seuillage, pour former une deuxième, et respectivement troisième, quatrième, composante filtrée d'ordre N ;

cN) détermination d'une pluralité de positions de mesures de spectrométrie d'ordre N sur ladite zone de l'échantillon, en fonction des valeurs des première, deuxième, troisième et quatrième composantes images filtrées d'ordre N ;

dN) pour chaque position de mesure de spectrométrie de la pluralité de positions de mesure de spectrométrie d'ordre N déterminées à l'étape cN), positionnement du faisceau d'excitation en une position de mesure de spectrométrie d'ordre N et acquisition d'une mesure de spectrométrie pour ladite position de mesure de spectrométrie d'ordre N ;

eN) reconstruction à l'ordre N-1 d'une image de spectrométrie, chaque point de l'image de spectrométrie reconstruite à l'ordre N-1 étant obtenu par une combinaison linéaire des mesures de spectrométrie acquises à l'étape dN).

Chaque image de spectrométrie reconstruite à l'ordre N-1 présente ainsi une résolution spatiale locale maximale égale à la résolution spatiale de l'image initiale IM0 divisée par 4 à la puissance N.

Selon un autre aspect particulier et avantageux du procédé, à l'étape b1), respectivement bN), chaque pixel de la première composante d'ordre un, respectivement d'ordre N, est formé par fusion de quatre pixels adjacents de l'image structurelle initiale, respectivement par fusion de quatre pixels adjacents de la première composante d'ordre N-1, les quatre pixels adjacents étant disposés sur deux lignes et deux colonnes de l'image structurelle initiale, respectivement de la première composante d'ordre N-1.

Selon un autre aspect particulier et avantageux du procédé, chaque pixel de la première composante d'ordre un, respectivement d'ordre N, a une valeur égale au quart de la somme des valeurs de quatre pixels adjacents de l'image structurelle initiale, respectivement au quart de la somme des valeurs de quatre pixels adjacents de la première composante d'ordre N-1, lesdits quatre pixels adjacents étant disposés sur deux lignes et deux colonnes.

Ainsi, l'étape b), respectivement bN), constitue une étape de décomposition en ondelettes de l'image structurelle initiale, respectivement de la première composante d'ordre N-1.

Selon un autre aspect particulier et avantageux du procédé, l'étape c) respectivement cN), de filtrage comporte une étape de mise à zéro de la valeur d'un pixel de ladite deuxième, respectivement troisième, quatrième, composante d'ordre un, respectivement d'ordre N, lorsque la valeur dudit pixel est inférieure ou égale à une valeur de seuil prédéterminée.

Selon un autre aspect particulier et avantageux, le procédé comprend une étape supplémentaire f), respectivement fN), suite à l'étape d), respectivement dN) et avant l'étape e), respectivement eN), dans lequel l'étape f), respectivement fN), comprend la reconstruction d'une première, deuxième, troisième et quatrième image décomposée de spectrométrie d'ordre un, respectivement d'ordre N, ladite première, deuxième, troisième et quatrième image décomposée de spectrométrie d'ordre un, respectivement d'ordre N ayant un nombre de points égal au nombre de pixels de ladite première, deuxième, troisième et quatrième image structurelle décomposée filtrée d'ordre un, respectivement d'ordre N, et dans lequel chaque pixel de valeur nulle de la deuxième, respectivement troisième, quatrième image structurelle décomposée filtrée d'ordre un, respectivement d'ordre N est associé à un point de valeur nulle de la deuxième, respectivement troisième, quatrième image décomposée de spectrométrie d'ordre un, respectivement d'ordre N, et dans lequel les valeurs des autres points des images décomposées de spectrométrie d'ordre un, respectivement d'ordre N sont calculées pour chaque autre point par une combinaison linéaire d'au plus quatre mesures de spectrométrie d'ordre un, respectivement d'ordre N obtenues à l'étape d), respectivement dN), et dans lequel l'étape e), respectivement eN), de reconstruction de l'image de spectrométrie, respectivement d'ordre N-1, comporte une étape de calcul par combinaisons linéaires des première, deuxième, troisième et quatrième image décomposée de spectrométrie d'ordre un, respectivement d'ordre N.

Dans une application particulière à l'imagerie de spectrométrie Raman ou de fluorescence optique ou de photoluminescence, l'étape d), respectivement dN), comprend l'acquisition de mesures de spectrométrie Raman ou de fluorescence optique ou de photoluminescence par balayage de faisceau laser et l'étape e), respectivement eN), comprend la reconstruction d'une image de spectrométrie Raman ou de fluorescence optique ou de photoluminescence.

Dans une autre application particulière à l'imagerie de cathodo-luminescence, l'étape d) respectivement dN), comprend l'acquisition de mesures de cathodo-luminescence ou de fluorescence de rayons X, par balayage de faisceau électronique et l'étape e), respectivement eN), comprend la reconstruction d'une image de cathodo-luminescence ou, respectivement, de fluorescence de rayons X.

Dans une autre application particulière à l'imagerie de fluorescence de rayons X, l'étape d) respectivement dN), comprend l'acquisition de mesures de fluorescence de rayons X par balayage de faisceau de rayons X et l'étape e), respectivement eN), comprend la reconstruction d'une image de fluorescence de rayons X.

Selon un aspect particulier et avantageux du procédé, l'étape a) comprend une étape de détection d'une image structurelle de l'échantillon sur un capteur d'image, ou une étape de récupération d'un fichier image de l'échantillon sur un autre instrument de métrologie ou une étape de chargement d'un fichier image à partir d'une base de données comprenant une image structurelle de l'échantillon et/ou une étape de numérisation d'une image structurelle analogique.

De façon particulièrement avantageuse, l'étape a) comprend en outre une étape de redimensionnement par agrandissement ou réduction, par exemple par des interpolations bilinéaires ou bicubiques, de façon à ce que la taille des pixels redimensionnés corresponde à une résolution spatiale maximale dans l'imagerie de spectrométrie reconstruite.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés:

- la figure 1 représente schématiquement un instrument d'imagerie à balayage de faisceau, selon l'art antérieur ;
- la figure 2 représente schématiquement une grille de distribution spatiale de points de mesure dans un plan XY de l'échantillon pour former une image de microspectrométrie reconstruite point par point, selon l'art antérieur ;
- la figure 3A représente schématiquement une image structurelle initiale d'une portion d'échantillon à analyser avec une résolution spatiale uniforme ;
- la figure 3B représente schématiquement une étape de décomposition en ondelettes et de calcul d'une première composante BL1 formée par fusion de blocs de 4 pixels de l'image structurelle initiale 3A ;
- la figure 4 représente schématiquement une autre étape de décomposition en ondelettes et de calcul, à partir de l'image structurelle initiale (IMO) de trois autres composantes formées par décomposition de l'image structurelle initiale suivant les variations verticales (HL1), respectivement horizontales (LH1) et diagonales (HH1), avec une résolution spatiale réduite ;
- la figure 5 illustre un exemple d'étape de seuillage appliquée à une composante (LH1, Fig. 5A) pour former une composante filtrée (LHF1, Fig. 5B) ;
- la figure 6 résume les étapes de calcul illustrées aux figures 4 et 5 et représente la transformation d'une image structurelle initiale de haute résolution spatiale en un jeu de composantes de résolution spatiale réduite: une composante BL1 formée par fusion; une composante filtrée des variations verticales (HLF1), respectivement composante filtrée des variations horizontales (LJ), et une composante filtrée des variations diagonales (HH) ;
- la figure 7 représente le résultat de la transformation d'une image structurelle initiale de haute résolution spatiale en un jeu de composantes d'ordre un (HLF1, LHF1, HHF1) et de composantes d'ordre deux (BL2, HLF2, LHF2, HHF2), les composantes d'ordre deux (BL2, HLF2, LHF2, HHF2) étant obtenues en appliquant à la première composante d'ordre un (BL1) des étapes de calcul analogues à celles représentées sur la figure 6, ces composantes d'ordre deux ayant une résolution spatiale doublement réduite ;
- la figure 8 illustre une grille de mesure suivant le pas de résolution initiale dans un plan de l'échantillon ;
- la figure 9 illustre la position d'un faisceau d'excitation pour une mesure de micro-spectrométrie sur la zone A avec la résolution spatiale initiale ;
- la figure 10 illustre une position d'un faisceau d'excitation pour une mesure de micro-spectrométrie moyennée sur deux zones A, B adjacentes d'une même ligne ;
- la figure 11 illustre une position d'un faisceau d'excitation pour une mesure de micro-spectrométrie moyennée sur quatre zones adjacentes disposées sur deux lignes et deux colonnes ;
- la figure 12 illustre deux positions d'un faisceau d'excitation pour deux mesures de micro-spectrométrie moyennées chacune sur deux zones adjacentes d'une même ligne A, B, respectivement C, D ;
- la figure 13 illustre deux positions d'un faisceau d'excitation pour deux mesures de micro-spectrométrie moyennées chacune sur deux zones adjacentes A, C d'une première colonne, respectivement deux zones adjacentes B, D d'une deuxième colonne ;
- la figure 14 illustre les positions d'un faisceau d'excitation pour une mesure de micro-spectrométrie sur deux zones A, B adjacentes disposées sur une même ligne avec la résolution spatiale initiale ;

- la figure 15 illustre les positions d'un faisceau d'excitation pour une mesure de micro-spectrométrie sur trois zones A, B, C adjacentes avec la résolution spatiale initiale ;
- la figure 16 illustre les positions d'un faisceau d'excitation pour une mesure de micro-spectrométrie sur quatre zones A, B, C, D adjacentes avec la résolution spatiale initiale ;
- la figure 17 illustre les positions d'un faisceau d'excitation pour une mesure de micro-spectrométrie sur deux zones A, C adjacentes disposées sur une même colonne avec la résolution spatiale initiale ;
- la figure 18 illustre une position d'un faisceau d'excitation pour une mesure de micro-spectrométrie moyennée sur deux zones A, C adjacentes d'une même colonne ;
- les figures 19-20 illustrent une étape de reconstruction d'une image de micro-spectrométrie (Fig. 20) à partir d'un ensemble de mesures effectuées suivant un ensemble de composantes de spectrométrie à un niveau (Fig. 19) ;
- la figure 21 représente schématiquement le principe de reconstruction multi-niveaux pour obtenir une image de spectrométrie à résolution spatiale multi-échelle ;
- la figure 22 illustre un exemple d'image structurelle initiale d'une portion d'échantillon à analyser, avec une résolution spatiale initiale ;
- la figure 23 illustre le résultat d'un procédé appliqué à l'image vidéo de la figure 22 et comprenant plusieurs étapes de décomposition et filtrage, puis plusieurs étapes de reconstruction pour former une image structurelle reconstruite mettant en évidence les zones d'acquisition multi-échelle, à pas d'échantillonnage multiple, l'échantillonnage étant affiné dans les zones de variations de l'image;
- la figure 24 illustre une image de micro-spectrométrie Raman de résolution spatiale multi-échelle reconstruite point par point obtenue en appliquant le procédé de l'invention, avec un facteur de compression de l'ordre de 20, c'est-à-dire obtenue avec 20 fois moins de mesures qu'une image entièrement mesurée avec la résolution la plus fine de l'image multi-échelle.

Dispositif

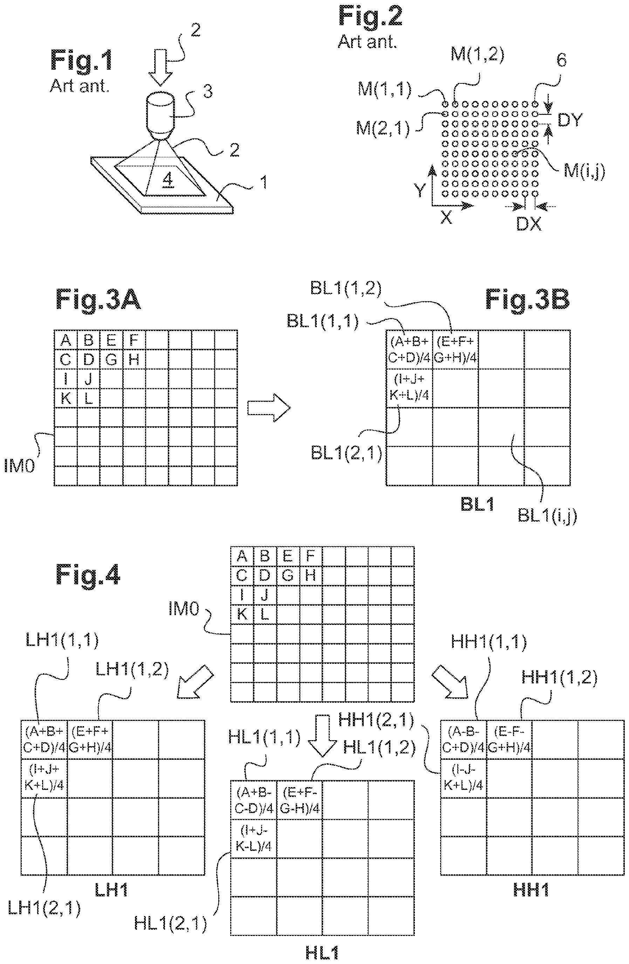

Sur la figure 1, on a représenté schématiquement un exemple d'instrument d'analyse basé sur un microscope à balayage de faisceau destiné à positionner un faisceau incident 2 séquentiellement en différents points d'un échantillon 1. Un tel microscope à balayage comporte un dispositif de balayage (généralement un scanner) pour faire varier l'angle d'incidence du faisceau incident 2 par rapport à l'échantillon 1 qui reste fixe pendant le balayage du faisceau. D'autres microscopes comportent un système de platine de déplacement pour déplacer l'échantillon par rapport au faisceau incident qui reste fixe. Enfin, certains microscopes combinent un balayage du faisceau incident et un déplacement de l'échantillon afin de couvrir une surface d'analyse ayant une plus grande étendue spatiale.

De manière générale, un microscope d'imagerie de spectrométrie point par point est configuré pour effectuer un déplacement relatif d'un faisceau d'excitation incident 2 par rapport à l'échantillon 1, de manière à diriger le faisceau d'excitation séquentiellement en différents points de l'échantillon à analyser.

L'instrument d'analyse comporte aussi un dispositif de spectrométrie, qui permet d'acquérir un signal de spectrométrie à chaque point de l'échantillon excité par le faisceau incident. L'instrument d'analyse comporte enfin un calculateur et un logiciel de traitement pour former point par point une image hyperspectrale ou plusieurs images de l'échantillon dans différentes bandes spectrales ou à différentes longueurs d'onde. Chaque point de l'image hyperspectrale représente donc une mesure de spectrométrie, par exemple un spectre de diffusion Raman, un spectre de fluorescence, un spectre de photoluminescence ou un spectre de cathodo-luminescence.

La figure 2 illustre un exemple classique de grille de balayage d'un faisceau (représenté par des disques ou spot de mesure 6) dans un plan (XY) d'un repère orthonormé en surface d'un échantillon. Le déplacement suit généralement une grille rectangulaire ou carrée, avec un pas DX suivant l'axe X et un pas DY suivant l'axe Y. Le pas DX est en général choisi égal au pas DY. On place le faisceau incident au point M(1, 1) et on acquiert un premier spectre en ce premier point. Puis on déplace le faisceau d'excitation au point M(1, 2) et on acquiert un deuxième spectre en ce deuxième point. On répète les opérations de déplacement du faisceau par rapport à l'échantillon et d'acquisition d'un spectre jusqu'à obtenir un spectre pour chaque point M(i, j) de la surface balayée 4 sur l'échantillon.

La résolution spatiale de l'image ainsi obtenue dépend de la taille du faisceau d'excitation sur l'échantillon et du pas de déplacement DX, DY choisi.

Le microscope peut être un microscope optique comportant un objectif de microscope 3 pour focaliser un faisceau laser 2 sur un échantillon 1 à analyser. Le microscope optique est combiné à un spectromètre Raman ou, respectivement de fluorescence optique ou de photoluminescence, configuré pour mesurer un spectre de diffusion Raman ou, respectivement un spectre de fluorescence optique ou de photoluminescence dans le domaine UV-visible.

Alternativement, le microscope peut être un microscope de fluorescence de rayons X, comportant un système de focalisation et de balayage de faisceau de rayons X. Le microscope de fluorescence de rayons X est alors combiné à un spectromètre configuré pour mesurer un spectre de rayons X (XRF).

Alternativement, le microscope peut être un microscope électronique à balayage (SEM pour Scanning Electron Microscope), comportant un système de focalisation et de balayage de faisceau électronique. Le microscope électronique à balayage est alors combiné à un spectromètre configuré pour mesurer un spectre de rayons X (EDX), ou respectivement un spectre de cathodo-luminescence.

Ces instruments d'analyse permettent d'acquérir point par point des mesures de spectrométrie d'un échantillon 1 sur une surface balayée 4 avec une résolution spatiale déterminée notamment par la taille du faisceau d'excitation incident sur l'échantillon.

Les techniques d'imagerie de spectrométrie point par point permettent d'obtenir une image résolue spatialement et spectralement d'un échantillon. A titre d'exemple, l'application de la microspectrométrie Raman permet d'analyser la distribution spatiale de composition chimique dans une zone d'un comprimé pharmaceutique, avec une résolution spatiale de l'ordre de $\lambda$, où $\lambda$ représente la longueur d'onde du faisceau d'excitation.

Classiquement, la résolution spatiale d'une image spectrale ou hyperspectrale obtenue en microscopie à balayage est spatialement uniforme sur toute la surface balayée et analysée. La durée d'acquisition d'une image de microspectrométrie à balayage croit en fonction du nombre de points dans l'image de spectrométrie ainsi formée.

L'instrument d'analyse de l'invention comporte en outre avantageusement un autre dispositif d'imagerie permettant d'acquérir une image structurelle initiale, de haute résolution spatiale, de la zone de l'échantillon à étudier. Cette image structurelle initiale peut être une image vidéo acquise au moyen d'une caméra CCD combinée au microscope à balayage. Dans un SEM, un détecteur d'électrons secondaires peut fournir rapidement une image de haute résolution spatiale. Or, certains détails structurels détectés sur une image vidéo de haute résolution, tel que par exemple des variations locales de luminosité, peuvent être indicatifs de variations de mesures obtenues par spectrométrie, bien que l'image vidéo ne puisse généralement pas fournir d'information de type spectrométrique.

Procédé

Tout d'abord, on acquiert une image structurelle d'un échantillon. Par acquisition d'image structurelle, on entend ici, soit détection d'une image de l'échantillon sur un capteur d'image, par exemple de type CCD, soit la récupération d'un fichier image de l'échantillon obtenu sur un autre instrument de métrologie ou à partir d'une base de données comprenant une image de l'échantillon. De préférence, on utilise une image structurelle numérique. Si l'image structurelle détectée ou collectée est analogique, on la numérise, de manière à obtenir une image structurelle initiale de l'échantillon. Si nécessaire, l'image structurelle initiale est redimensionnée en fonction de la zone que l'on souhaite analyser par balayage du faisceau d'excitation et/ou par déplacement de l'échantillon par rapport au faisceau d'excitation.

Par exemple, l'image structurelle détectée est une image vidéo obtenue au moyen d'un capteur CCD et en éclairant l'échantillon en lumière blanche. Les réglages de l'éclairage et du système de détection sont ajustés de manière à augmenter le contraste de l'image et en faire ressortir les détails structurels. Avantageusement, l'intensité, la polarisation et/ou la longueur d'onde d'illumination et/ou de détection sont ajustés de manière à obtenir une image structurelle initiale fortement contrastée.

On entend ici par image structurelle une image constituée de pixels. La valeur de chaque pixel représente par exemple une intensité lumineuse par réflexion ou transmission dans le domaine visible, infrarouge, ou une cartographie d'un circuit en microélectronique. La valeur d'un pixel n'est généralement pas représentative, directement ou indirectement, d'une mesure de spectrométrie de l'échantillon.

On applique ensuite à cette image structurelle initiale des étapes successives de traitement d'image, éventuellement répétées de manière itérative pour déterminer un échantillonnage multi-échelle. De préférence, le traitement d'image est basé sur une méthode de décomposition en ondelettes, de compression et de filtrage.

Des méthodes alternatives à la décomposition en ondelettes peuvent aussi être utilisées. A titre d'exemple, on cite notamment les méthodes de traitement d'image basées sur :

- la recherche de contours par calculs de gradients ou de dérivées d'ordres supérieurs, telles que les méthodes des dérivées de Sobel, opérateur de Laplace, ou par des fonctions numériques disponibles telles que cvFindContours ; ou
- la recherche de formes par transformation de Hough.

Ces fonctions numériques sont disponibles la librairie open source OpenCV de traitement d'images. A partir des contours, il est ainsi possible de déterminer des zones de pas d'échantillonnage plus fin.

Les figures 3 et 4 illustrent un exemple d'étapes de décomposition en ondelettes et de compression à l'ordre un d'une image structurelle initiale IM0.

La figure 3 représente schématiquement une première étape d'extraction d'une première composante BL1 à partir de l'image structurelle initiale IM0, par une diminution de la résolution spatiale suivant deux dimensions. La figure 3A représente schématiquement une image structurelle initiale IM0 de type image vidéo acquise sur une zone 4 d'un échantillon à analyser. La valeur de chaque pixel de cette image structurelle initiale IM0 est ici représentée par une lettre A, B, C, D, E, F, G, H, I, J, K, L. La figure 3B représente schématiquement une première composante BL1 calculée à partir de l'image structurelle initiale par fusion d'un bloc de 4 pixels adjacents. La valeur du pixel BL1(1, 1) de la première composante BL1 correspond à la moyenne des valeurs A, B, C, D de 4 pixels adjacents de l'image structurelle initiale IM0. De manière analogue, la valeur du pixel BL1(1, 2) de la première composante BL1 correspond à la moyenne des valeurs E, F, G, H de 4 autres pixels adjacents de l'image structurelle initiale IM0. De même, la valeur du pixel BL1(2, 1) de la première composante BL1 correspond à la moyenne des valeurs I, J, K, L de 4 autres pixels adjacents de l'image structurelle initiale IM0. Un traitement analogue est appliqué à toute l'image structurelle initiale IM0 pour obtenir la composante BL1.

$$BL1\,(1,\,1) = (A + B + C + D)/4$$

$$BL1\,(1,\,2) = (E + F + G + H)/4$$

$$BL1\,(2,\,1) = (I + J + K + L)/4$$

Plus généralement, la valeur d'un pixel de coordonnées (i, j) dans la composante BL1 est définie comme suit :

$$BL1\,(i,j)$$

$$= \frac{1}{4} \times \left( IM0(2i - 1, 2j - 1) + IM0(2i - 1, 2j) + IM0(2i, 2j - 1) + IM0(2i, 2j) \right)$$

La figure 4 représente schématiquement l'extraction de trois autres composantes à partir de l'image structurelle initiale IM0.

La composante LH1 représente les variations horizontales de l'image structurelle initiale. La valeur d'un pixel de la composante LH1 des variations horizontales est obtenue par une addition en colonne et une soustraction en ligne des valeurs de 4 pixels adjacents de l'image structurelle initiale IM0 :

$$LH1\,(1,\,1) = (A - B + C - D)/4$$

$$LH1\,(1,\,2) = (E - F + G - H)/4$$

$$LH1\,(2,\,1) = (I - J + K - L)/4$$

Plus généralement, la valeur d'un pixel de coordonnées (i, j) dans la composante LH1 des variations horizontales est définie comme suit :

$$LH1\,(i,j)$$

$$= \frac{1}{4} \times \left( IM0(2i - 1, 2j - 1) - IM0(2i - 1, 2j) + IM0(2i, 2j - 1) - IM0(2i, 2j) \right)$$

La composante HL1 représente les variations verticales de l'image structurelle initiale IM0. La valeur d'un pixel de la composante HL1 des variations verticales est obtenue par une addition en ligne et une soustraction en colonne des valeurs de 4 pixels adjacents de l'image structurelle initiale IM0:

$$HL1(1,\,1) = (A + B - C - D)/4$$

$$HL1\,(1,\,2) = (E + F - G - H)/4$$

$$HL1\,(2,\,1) = (I + J - K - L)/4$$

Plus généralement, la valeur d'un pixel de coordonnées (i, j) dans la composante HL1 des variations verticales est définie comme suit :

$$HL1\,(i,j)$$

$$= \frac{1}{4} \times \big( IM0(2i-1, 2j-1) + IM0(2i-1, 2j) - IM0(2i, 2j-1) - IM0(2i, 2j) \big)$$

La composante HH1 représente les variations diagonales de l'image structurelle initiale IM0. La valeur d'un pixel de la composante HH1 des variations diagonales est obtenue par une addition suivant une diagonale et une soustraction suivant l'autre diagonale des valeurs de 4 pixels adjacents de l'image structurelle initiale IM0 :

$$HH1\,(1,\,1) = (A - B - C + D)/4$$

$$HH1\,(1,\,2) = (E - F - G + H)/4$$

$$HH1\,(2,\,1) = (I - J - K + L)/4$$

Plus généralement, la valeur d'un pixel de coordonnées (i, j) dans la composante HH1 des variations diagonales est définie comme suit :

$$LL1\,(i,j)$$

$$= \frac{1}{4} \times \big( IM0(2i-1, 2j-1) - IM0(2i-1, 2j) - IM0(2i, 2j-1) + IM0(2i, 2j) \big)$$

La valeur d'un pixel quelconque (i, j) de chaque composante (BL1, LH1, HL1, HH1) est ainsi obtenue par une combinaison linéaire distincte entre les valeurs de 4 pixels adjacents de l'image structurelle initiale IM0. La résolution spatiale de chaque composante BL1, LH1, HL1, HH1 est donc inférieure d'un facteur 4 à celle de l'image structurelle initiale IM0. Par exemple, si l'image structurelle initiale IM0 a une résolution spatiale de 512x512 pixels, chaque composante a une résolution spatiale de 256x256 pixels.

L'image structurelle initiale IM0 de haute résolution est ainsi décomposée en 4 composantes d'ordre un (BL1, LH1, HL1, HH1). Chaque composante d'ordre un présente une résolution spatiale réduite d'un facteur 4 par rapport à celle de l'image structurelle initiale.

A l'issue de cette première étape de décomposition, on obtient 4 composantes d'ordre un. On note que le nombre total de points de l'image structurelle initiale 10 est ici égal à la somme du nombre de points des quatre composantes d'ordre un.

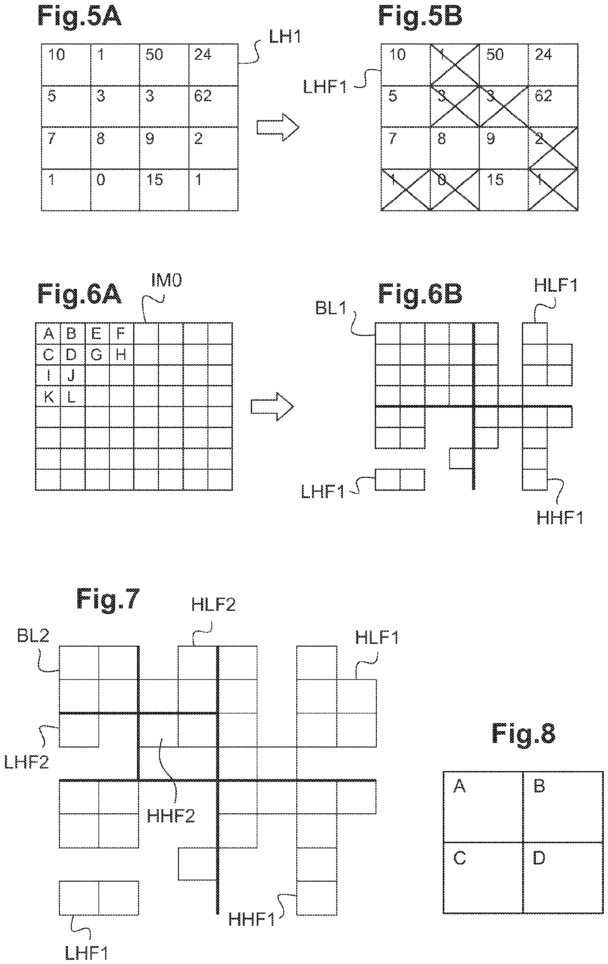

La figure 5 représente schématiquement une étape de filtrage par seuillage appliquée à une composante de variations spatiales d'ordre un, par exemple LH1, pour former une composante filtrée d'ordre un, ici LHF1. Plus précisément, on a représenté sur la figure 5A un exemple d'une composante de variations spatiales horizontales indiquant des valeurs numériques pour chaque pixel de cette composante d'ordre un. On détermine une valeur de seuil, par exemple ici égale à 3. L'opération de seuillage consiste à supprimer les pixels ayant une valeur inférieure ou égale à 3 et à conserver les autres pixels ayant une valeur supérieure à 3 Autrement dit, on annule la valeur des pixels ayant une valeur inférieure ou égale à la valeur de seuil. Ainsi, dans l'exemple représenté sur la figure 5B, on obtient une composante de fréquences spatiales filtrées LHF1, qui ne comporte plus que 9 pixels de valeur non nulle puisque 7 pixels ont été supprimés (représentés sur la figure 5B par des croix) et que la composante de variations spatiales LH1 comportait 16 pixels.

De manière analogue, on applique une opération de seuillage à la composante de variations spatiales verticales d'ordre un, HL1, pour obtenir une composante compressée de variations spatiales verticales filtrées d'ordre un HLF1. De même, on applique une opération de seuillage à la composante de variations spatiales diagonales d'ordre un HH1 pour obtenir une composante de variations spatiales diagonales filtrées d'ordre un HHF1. La valeur de seuil appliquée à chaque composante d'ordre un HL1, LH1, HH1 peut être identique ou au contraire, adaptée en fonction de chaque type d'image. De préférence, la ou les valeurs de seuil sont déterminées de manière à supprimer un nombre relativement important de points correspondant à des variations spatiales relativement faibles afin de conserver uniquement les pixels image correspondant à des variations spatiales relativement élevées. Les composantes de fréquences spatiales filtrées d'ordre un LHF1, HLF1 et HHF1 ont perdu des informations spatiales variations de faible amplitude, mais conservent l'information spatiale des variations de forte amplitude, et plus précisément au-dessus du seuil de filtrage appliqué. L'information spatiale basse fréquence est néanmoins présente dans la composante de fusion d'ordre un BL1.

Cette opération de filtrage des variations vise à préserver une résolution spatiale la plus élevée pour les points de l'image qui correspondent à des variations dans l'image structurelle initiale pouvant être associées à des variations locales dans la composition physico-chimique de l'échantillon et à traiter les pixels associés à de basses fréquences spatiales avec une résolution spatiale plus faible.

Le procédé de décomposition et de filtrage d'ordre un est résumé sur la figure 6, qui représente sur la figure 6A une image structurelle initiale IM0, et sur la figure 6B une première composante d'ordre un BL1, une deuxième composante de variations spatiales horizontales filtrées d'ordre un HLF1, une troisième composante de variations spatiales verticales filtrées d'ordre un LHLF1 et une quatrième composante de variations spatiales diagonales filtrées d'ordre un HHF1.

Les opérations de décomposition et de compression peuvent être répétées de manière récursive, pour obtenir une décomposition de l'image structurelle initiale d'ordre un, deux ou trois. Les opérations de seuillage des images compressées décomposées en fréquences spatiales sont alors appliquées après chaque étape de décomposition d'ordre un, respectivement d'ordre deux, et d'ordre trois.

Une étape de décomposition d'ordre deux peut être appliquée à la première composante BL1 calculée à partir de l'image structurelle initiale IM0 par fusion de 4 pixels adjacents. Dans cette deuxième étape, on décompose la première composante d'ordre un, BL1, en quatre composantes d'ordre deux: BL2, LH2, HL2, HH2. La composante de fusion d'ordre deux BL2 est obtenue par fusion de 4 pixels adjacents de la composante de fusion d'ordre un BL1. La valeur d'un pixel de la composante de fusion d'ordre deux BL2 correspond à la moyenne des valeurs de 4 pixels adjacents de la première composante d'ordre un.

La composante d'ordre deux LH2 représente les variations horizontales de la première composante BL1 d'ordre un. La valeur d'un pixel de la composante des variations horizontales d'ordre deux LH2 est obtenue par une addition en colonne et une soustraction en ligne des valeurs de 4 pixels adjacents de la première composante d'ordre un BL1, obtenue par fusion.

La composante d'ordre deux HL2 représente les variations verticales de la première composante d'ordre un BL1. La valeur d'un pixel de la composante d'ordre deux des variations verticales, HL2, est obtenue par une addition en ligne et une soustraction en colonne des valeurs de 4 pixels adjacents de la première composante d'ordre un BL1.

La composante d'ordre deux HH2 représente les variations diagonales de la première composante d'ordre un BL1. La valeur d'un pixel de la composante d'ordre deux des variations diagonales, HL2, est obtenue par une addition suivant une diagonale et une soustraction suivant l'autre diagonale des valeurs de 4 pixels adjacents de la première composante d'ordre un BL1.

Chaque composante d'ordre deux (BL2, LH2, HL2, HH2) a une résolution spatiale réduite d'un facteur 4 par rapport à celle de la première composante d'ordre un BL1, ou d'un facteur 16 par rapport à l'image structurelle initiale IM0. Les composantes d'ordre deux LH2, HL2, HH2 sont ensuite filtrées par seuillage, pour former des composantes filtrées d'ordre deux LHF2, HLF2, HHF2.

La figure 7 illustre ainsi un exemple de décomposition et filtrage à l'ordre deux d'une image structurelle initiale IM0 en un ensemble constitué de quatre composantes d'ordre deux (BL2, LHF2, HLF2, HHF2) et de trois composantes d'ordre un (HLF1, LHF1, HHF1), représentant les variations spatiales de l'image structurelle initiale.

La décomposition et le filtrage de l'image structurelle initiale peut se poursuivre en particulier à l'ordre trois, décomposant la première composante d'ordre deux BL2 en quatre images obtenues de manière analogues aux étapes décrites ci-dessus : une première composante d'ordre trois BL3 obtenue par fusion; et trois autres composantes d'ordre trois (HLF3, LHF3, HHF3) représentant les variations spatiales horizontales, verticales et respectivement diagonales de la première composante d'ordre deux BL2.

Ce procédé permet ainsi d'obtenir une image décomposée et filtrée, comme illustré sur la figure 7. Cette image décomposée et filtrée comporte moins de pixels de valeur non nulle que l'image structurelle initiale, puisque la valeur de certains pixels a été annulée par seuillage.

De manière connue, il est possible de calculer une image numérique par reconstruction à partir des images décomposées et filtrées.

Plus spécifiquement, le procédé de décomposition et filtrage permet ici de déterminer les coordonnées spatiales d'une pluralité de points sur l'échantillon où effectuer les mesures de spectrométrie correspondant aux composantes BL, HLF, LHF et HHF d'ordre un et, le cas échéant, aux composantes d'ordre 2, 3, 4...

On applique la suite du traitement aux mesures de spectrométrie et non plus à l'image structurée de l'échantillon.

Classiquement, l'imagerie point par point de spectrométrie consiste à effectuer des mesures en positionnant le faisceau d'excitation suivant une grille de déplacement carrée ou rectangulaire, avec un pas constant suivant X et suivant Y (voir figures 1-2). La valeur des pas suivant X et suivant Y est choisie au cas par cas par l'utilisateur, et n'a pas de lien direct avec la taille des pixels de l'image structurelle initiale. Au contraire, selon la présente divulgation, on sélectionne des points pour les mesures de spectrométrie de manière à acquérir directement des points correspondant aux pixels non nuls des composantes filtrées de l'image structurelle initiale décomposée.

Supposons qu'on ait une image décomposée et filtrée telle qu'illustrée sur la figure 6B. On effectue la mesure de spectrométrie correspondant à l'image BL1 en effectuant 16 points de mesure de spectrométrie distribués sur toute la surface 4 à analyser de l'échantillon 1. Ces mesures de spectrométrie peuvent être réalisées avec un faisceau d'excitation incident ayant un diamètre relativement gros sur l'échantillon, puisqu'il peut couvrir une surface s'étendant jusqu'à 4 pixels de l'image structurelle initiale. Pour cela, on peut par exemple utiliser un objectif de macroscopie en spectrométrie Raman. On obtient ainsi aisément en une seule mesure la valeur du point BL (1, 1) telle que

$$BL\,(1,1) = \frac{(A+B+C+D)}{4}$$

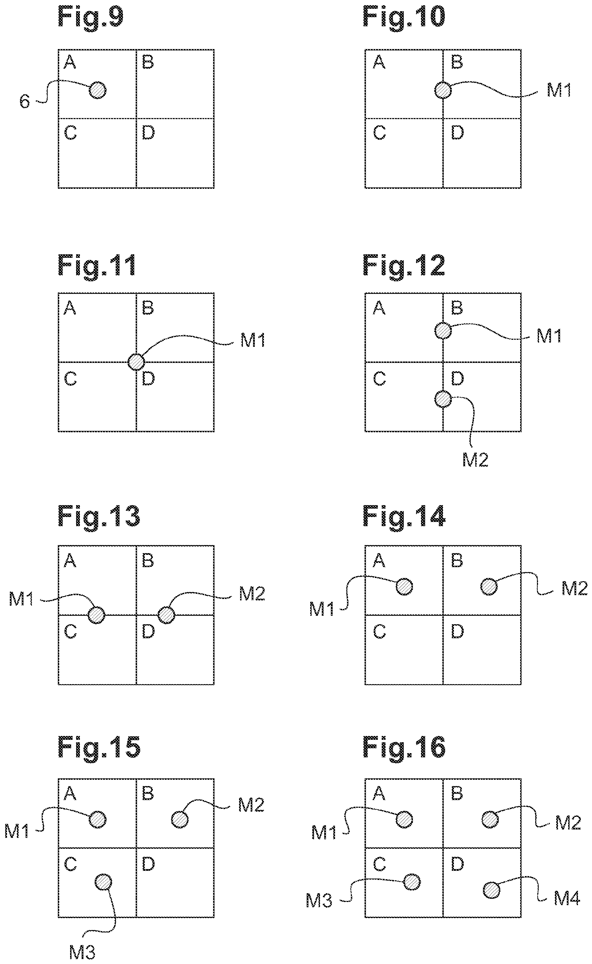

. De manière alternative (voir figure 11), on utilise un faisceau incident de diamètre constant, par exemple en utilisant un objectif de microscope, mais on positionne le faisceau incident en un point de l'échantillon correspondant au milieu des 4 pixels adjacents A, B, C, D de l'image structurelle initiale pour obtenir un point de mesure

$$BL\,(1,1) = \frac{(A+B+C+D)}{4}$$

central qui est une approximation de .

Les mesures des autres composantes de variations spatiales, HL, LH, HH peuvent être obtenues à partir d'une ou plusieurs mesures et par différentes combinaisons linéaires. Ces mesures peuvent dépendre du niveau de décomposition (un seul niveau de décomposition, comme illustré sur la figure 6B, ou plusieurs niveaux de décomposition comme illustré sur la figure 7), ainsi que des valeurs de la composante basse fréquence spatiale BL et des composantes de variations spatiales HL, LH, HH, aussi appelées composantes des détails.

On cherche ensuite à effectuer des mesures correspondant aux valeurs non nulles des images décomposées et filtrées. Toutefois, la relation entre les valeurs des images décomposées et filtrées et les coordonnées physiques des points où effectuer les mesures n'est pas directe. Plus précisément, on cherche à effectuer un nombre limité de mesure, pour limiter la durée totale d'acquisition. Il découle de la présente divulgation que les coordonnées physiques des points de mesure dépendent des valeurs des pixels des images structurelles décomposées et filtrées HLF, LHF, HHF.

On considère à titre d'exemple, une zone de l'échantillon (illustrée sur la figure 8) correspondant dans l'image structurelle initiale à 4 pixels adjacents.

Dans la suite de la description de l'acquisition des mesures de spectrométrie, les variables A, B, C, D représentent les valeurs ou fonctions spectrales recherchées respectivement en 4 points adjacents de l'échantillon.

Sur les figures 9-18, on a représenté différentes positions du spot 6 de mesure par spectrométrie déterminées pour obtenir différentes images compressées de spectrométrie au moyen d'un nombre limité de mesures de spectrométrie et par des opérations basées sur des combinaisons linéaires de ces mesures ponctuelles de spectrométrie.

Après analyse de l'image structurelle initiale, on connait toutes les positions de mesure multi-échelle nécessaires. Toutefois, on effectue des balayages successifs, chaque balayage correspondant aux mesures de spectrométrie nécessaires pour reconstruire un niveau d'échelle.

Ainsi, on effectue un premier balayage du faisceau sur la zone 4 de l'échantillon à analyser pour des mesures de spectrométrie à la plus basse résolution spatiale. On sélectionne la résolution spatiale correspondant au niveau de décomposition le plus élevé, autrement dit correspondant à des pixels de grandes dimensions.

.Sur la figure 9, la position du spot 6 permet de mesurer directement un point et d'obtenir l'acquisition du spectre A, autrement dit une mesure de spectrométrie, ici M1= A.

Sur la figure 10, le spot de mesure est placé entre deux points adjacents d'une même ligne, ce qui permet d'acquérir directement une mesure de spectrométrie correspondant à une moyenne, ici M1= (A+B) /2.

On considère d'abord le cas la décomposition d'un bloc de 4 pixels ABCD génère des composantes de variations toutes de valeur nulle (HL, LH, HH) en un point (i,j) de chaque composante HL,LH,HH, à un ordre donné., c'est-à-dire où A ≈ B ≈ C ≈ D. Dans ce cas, une seule mesure M1 suffit. Par exemple, comme illustré sur la figure 11, le spot de mesure 6 est placé entre quatre pixels adjacents disposés en carré sur deux lignes et deux colonnes. Le spot de mesure 6 peut avoir la plus petite taille définie par le faisceau incident ou avoir une taille supérieure à celle d'un pixel. Le spot de mesure 6 couvre au maximum la surface des quatre pixels adjacents. On acquiert ainsi directement en une seule mesure M1 = A = B = C = D.

On considère ensuite le cas où la décomposition d'un bloc de 4 pixels ABCD génère seulement deux composantes de variations nulles, à un ordre donné. Dans ce cas, deux mesures M1, M2 sont nécessaires et suffisantes. Sur la figure 12, on considère le cas où seules les composantes de variations verticales HL sont non nulles, c'est-à-dire où A ≈ B et C ≈ D, les autres composantes de variations horizontales et diagonales étant nulles à cet ordre Dans ce cas, le spot de mesure 6 est placé entre deux pixels adjacents d'une première ligne pour une première mesure M1, puis le spot de mesure 6 est placé entre deux pixels adjacents d'une deuxième ligne adjacente à la première ligne pour une deuxième mesure M2. On acquiert ainsi directement à la première mesure M1 = A = B et à la deuxième mesure M2 = C = D. Dans ce cas, on calcule par de simples opérations d'addition et de soustraction, d'une part, la première composante aux basses fréquences spatiales BL = (M1 + M2)/2 et, d'autre part, la composante de variations verticales HL = (M1 - M2)/2.

Sur la figure 13, on considère le cas où la décomposition d'un bloc de 4 pixels ABCD génère seulement une composante de variations horizontales LH non nulle, c'est-à-dire où $A \approx C$ et $B \approx D$, les autres composantes de variations verticales et diagonales étant nulles à cet ordre. Dans ce cas, le spot de mesure 6 est placé entre deux pixels adjacents d'une première colonne pour une première mesure M1, puis le spot de mesure 6 est placé, pour une deuxième mesure M2, entre deux pixels adjacents d'une deuxième colonne adjacente à la première colonne. On acquiert ainsi directement à la première mesure M1 = A = C et à la deuxième mesure M2 = B = D. Dans ce cas, on calcule par de simples opérations d'addition et de soustraction d'une part la première composante aux basses fréquences spatiales : BL = (M1 + M2)/2 et, d'autre part, la composante de variations horizontales: LH = (M1 - M2)/2.

Sur la figure 14, on considère le cas où la décomposition d'un bloc de 4 pixels ABCD génère seulement une composante de variations diagonales non nulle, c'est-à-dire où $A + C \approx B + D$, $A + B \approx C + D$ ou $A - B \approx D - C$, autrement dit $A \approx D$ et $B \approx C$, les autres composantes de variations horizontales et verticales étant nulles à cet ordre. Dans ce cas, le spot de mesure 6 est placé sur le pixel A pour une première mesure M1, puis sur le pixel B pour une deuxième mesure M2. On acquiert ainsi directement à la première mesure M1 = A, respectivement à la deuxième mesure M2 = B. Dans ce cas, on déduit simplement d'une part A = D = M1 et, d'autre part, B= C= M2.

On considère maintenant les cas où une seule composante de variations est nulle. Dans ce cas, trois mesures de spectrométrie sont nécessaires.

Sur la figure 15, le spot de mesure 6 est placé sur le pixel A pour une première mesure M1, puis sur le pixel B pour une deuxième mesure M2, et enfin sur le pixel C pour une troisième mesure M3. On acquiert ainsi directement à la première mesure M1 = A, respectivement à la deuxième mesure M2 = B, respectivement à la troisième mesure M3 = C. On considère un premier cas où seules les composantes de variations diagonales sont nulles, c'est-à-dire où $A + D \approx B + C$, autrement dit $D \approx B + C - A$. Dans ce premier cas, on calcule par de simples opérations d'addition et de soustraction D = (M2 + M3 - M1). Toujours en lien avec la figure 15, on considère un deuxième cas où seules les composantes de variations horizontales LH sont nulles, c'est-à-dire où $A + C \approx B + D$, autrement dit $D \approx A - B + C$. Dans ce deuxième cas, on calcule la valeur de D comme suit : D = (M1 - M2 + M3). Toujours en lien avec la figure 15, on considère un troisième cas où seules les composantes de variations verticales HL sont nulles, c'est-à-dire où $A + B \approx C + D$, autrement dit $D \approx A + B - C$. Dans ce deuxième cas, on calcule la valeur de D comme suit : D = (M1 + M2 - M3).

On considère maintenant les cas où aucune composante de variations n'est nulle. Dans ce cas, quatre mesures de spectrométrie sont nécessaires.

Sur la figure 16, on considère le cas aucune composante (BL, LH, HL, HH) n'est nulle à un ordre donné. Dans ce cas, il est nécessaire d'acquérir les quatre points de mesure. Le spot de mesure 6 est placé sur le pixel A pour une première mesure M1, puis sur le pixel B pour une deuxième mesure M2, sur le pixel C pour une troisième mesure M3 et enfin sur le pixel D pour une quatrième mesure M4. On acquiert ainsi quatre mesures : A = M1, B = M2, C = M3, D = M4.

En fonction des valeurs des images décomposées, ces mesures de spectrométrie sont répétées pour chaque niveau de décomposition, autrement dit à chaque ordre, en partant de la plus basse résolution spatiale jusqu'à la plus haute résolution spatiale.

Dans le cas d'une compression multi-niveaux, on effectue tout d'abord un nouveau balayage pour l'acquisition de mesures de spectrométrie suivant les composantes LH, HL et HH correspondant à une résolution spatiale plus élevée, autrement à des pixels plus petits. Plus précisément, chaque pixel du balayage précédent est divisé en quatre pixels adjacents disposés sur deux lignes et deux colonnes.

En général, pour ce niveau secondaire de balayage, dans le cas où toutes les composantes de variations sont nulles, autrement dit $A \approx B \approx C \approx D$ (voir figure 8), BL est égal à la valeur d'un pixel correspondant de l'image reconstruite à l'étape précédente et il n'est pas nécessaire d'effectuer une mesure de BL. En revanche, quand le faisceau de mesure est beaucoup plus petit que la taille des pixels, ce qui est fréquent, on répète la même méthode que pour le premier balayage. C'est-à-dire que si l'une des composantes HL, LH ou HH est non nulle, on ne tient pas compte de la valeur BL déjà obtenue.

Dans le cas où seule la composante HL à ce niveau de décomposition est non nulle, autrement dit $A \approx B$ et $C \approx D$, on place le spot de mesure entre deux pixels adjacents d'une même ligne pour acquérir une mesure M1 (comme illustré sur la figure 10). On en déduit A = B = M1 et C = D = 2·BL -M1.

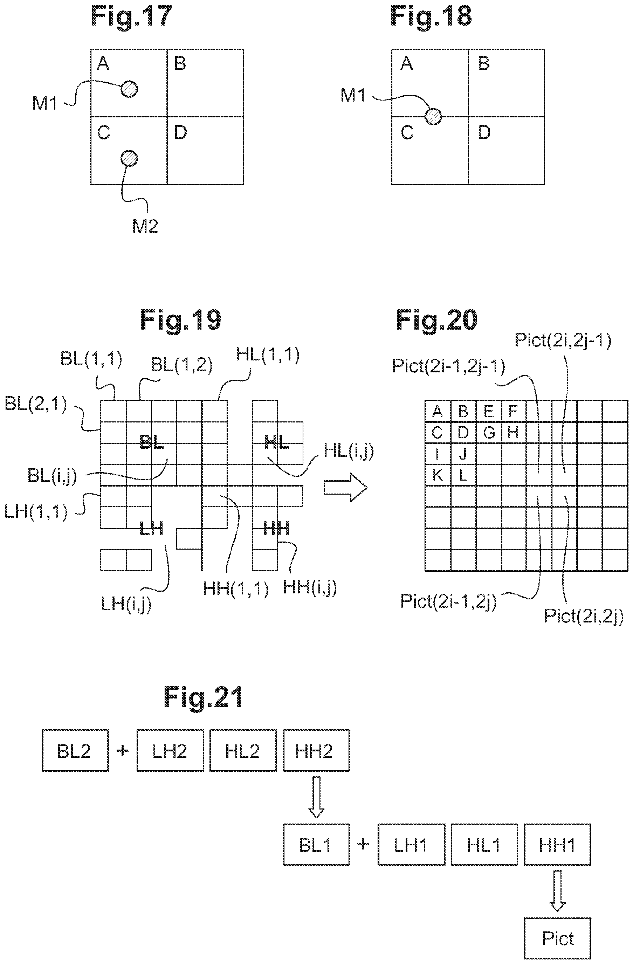

Dans le cas où seule la composante LH à ce niveau de décomposition est non nulle, autrement dit $A \approx C$ et $B \approx D$, on place le spot de mesure entre deux pixels adjacents d'une même colonne pour acquérir une mesure M1 (comme illustré sur la figure 18). On en déduit A = C = M1 et B = D = 2·BL-M1.

Dans le cas où seules les composantes HL et LH à ce niveau de décomposition sont non nulles, autrement dit $A + D \approx B + C$ soit $D \approx B+C-A$, on place le spot de mesure sur le pixel A pour une première mesure M1, puis sur le pixel C pour une deuxième mesure M2 (comme illustré sur la figure 17). On acquiert ainsi directement A= M1 et C = M2. Puis, on calcule B =2·BL -M2 et D = 2·BL-M1.

Dans le cas où seules les composantes LH et HH à ce niveau de décomposition sont non nulles, autrement dit $A + B \approx C + D$ soit $D \approx A + B - C$, on place le spot de mesure sur le pixel A pour une première mesure M1, puis sur le pixel C pour une deuxième mesure M2 (comme illustré sur la figure 17). On acquiert ainsi directement A= M1 et C = M2. Puis, on calcule B =2·BL -M1 et D = 2·BL -M2.

Dans le cas où seules les composantes HL et HH à ce niveau de décomposition sont non nulles, autrement dit A + C ≈ B + D soit D ≈ -A+C-B, on place le spot de mesure sur le pixel A pour une première mesure M1, puis sur le pixel C pour une deuxième mesure M2 (comme illustré sur la figure 14). On acquiert ainsi directement A= M1 et B = M2. Puis, on calcule C =2·BL -M1 et D = 2·BL -M2.

Dans le cas où, à ce niveau de décomposition secondaire, seule la composante HH est non nulle, autrement dit A + C ≈ B + D, ou A + B ≈ C + D, ou A - B ≈ D - C, on place le spot de mesure sur le pixel A pour une seule mesure M1 (comme illustré sur la figure 9). On acquiert ainsi directement A= D = M1. Puis, on calcule B = C =2·BL -M1.

Dans le cas où, à ce niveau de décomposition secondaire, aucune composante n'est nulle, on place le spot de mesure 6 sur le pixel A pour une première mesure M1, puis sur le pixel B pour une deuxième mesure M2, et sur le pixel C pour une troisième mesure M3 (comme illustré sur la figure 15). On acquiert ainsi directement à la première mesure M1 = A, respectivement à la deuxième mesure M2 = B, respectivement à la troisième mesure M3 = C. Puis, on calcule D = 4·BL -M1-M2-M3.

On réitère les mesures de spectrométrie de manière analogue pour le ou les éventuels niveaux de décomposition suivants avec une résolution spatiale quatre fois plus élevée à chaque niveau, jusqu'à atteindre le niveau maximal niveau ayant la résolution de l'image structurelle ayant servi à la décomposition. Lors de l'acquisition, on remonte les niveaux de décomposition et on arrive donc naturellement, sans ambigüité possible, à la résolution de l'image structurelle initiale.

On détermine ainsi les positions des points de mesure de spectrométrie à effectuer en fonction des composantes basse fréquence spatiale et de variations des images structurelles décomposées.

Le nombre total de mesures est inférieur à celui d'un balayage classique à la plus haute résolution spatiale puisque toutes les composantes nulles sont directement remplacées par des zéros et non pas mesurées.

On détermine le nombre de mesures de spectrométrie nécessaires pour obtenir un ensemble d'images de spectrométrie décomposées. Le taux de compression est défini comme le rapport du nombre de mesures de spectrométrie sur le nombre total de pixels de l'image de spectrométrie à haute résolution.

En pratique on obtient un taux de compression de l'ordre de 3 à 4 pour un niveau de compression, de l'ordre de 8-15 pour deux niveaux de compression et de l'ordre de 15 à 30 pour trois niveaux de compression. Autrement dit, hors temps de calculs de combinaisons linéaires, qui n'est nullement limitant, la durée d'acquisition d'une image est ainsi réduite approximativement par le taux de compression.

On obtient, à partir d'un nombre limité de mesures de spectrométrie, un ensemble d'images de spectrométrie décomposées suivant un ou plusieurs niveaux.

L'étape suivante consiste à reconstruire point par point une image de spectrométrie de la zone de l'échantillon à partir de ces images de spectrométrie décomposées.

A partir des mesures de spectrométrie suivant les composantes BL, LH, HL et HH ainsi acquises et calculées à un niveau de décomposition (Figure 19) on effectue ensuite une reconstruction point par point pour calculer et afficher une image hyperspectrale Pict de haute résolution (Figure 20).

Plus précisément, on considère un point situé sur une ligne i et une colonne j de chaque image décomposée de spectrométrie: BL(i, j), HL(i, ,j), LH(i, j) et HH(i,j). Les valeurs manquantes dans les images décomposées des détails HL, LH et HH sont toutes remplacées par des zéros.

Puis on calcule, à partir des quatre mesures BL(i, j), HL(i, j), LH(i, j) et HH(i,j) des images décomposées, les valeurs de quatre points reconstruits dans l'image de spectrométrie Pict en appliquant les équations suivantes :

$$Pict\ (2i-1, 2j-1) = BL\ (i,j) + HL\ (i,j) + LH\ (i,j) + HH(i,j)$$

$$Pict\ (2i-1, 2j) = BL\ (i,j) + HL\ (i,j) - LH\ (i,j) - HH(i,j)$$

$$Pict\ (2i, 2j-1) = BL\ (i,j) - HL\ (i,j) + LH\ (i,j) - HH(i,j)$$

$$Pict\ (2i, 2j) = BL\ (i,j) - HL\ (i,j) - LH\ (i,j) + HH(i,j)$$

L'image reconstruite Pict présente ainsi une résolution spatiale quatre fois supérieure à celle de l'image compressée de spectrométrie à basse fréquence.

De façon avantageuse, les opérations de reconstruction sont basées uniquement sur des combinaisons linéaires, arithmétiques, sans pondération. Les calculs de reconstruction sont donc très rapides.

Dans le cas où l'image est décomposée et compressée sur plusieurs niveaux, la reconstruction multiniveaux est effectuée de manière pyramidale, comme illustré sur la figure 21. On commence par acquérir les composantes d'ordre deux BL2, HL2, LH2 et HH2. Avec cet ensemble on reconstruit la première composante d'ordre un BL1, et on acquiert les autres composantes d'ordre un et des autres composantes d'ordre un HL1,LH1, HH1, on reconstruit l'image de spectrométrie multi-échelle Pict.

La présente divulgation permet d'effectuer l'acquisition et la reconstruction d'une image de spectrométrie à haute résolution avec une durée d'acquisition réduite comparée à une acquisition d'image de spectrométrie point par point suivant un échantillonnage spatial de pas unique et constant sur toute l'image.

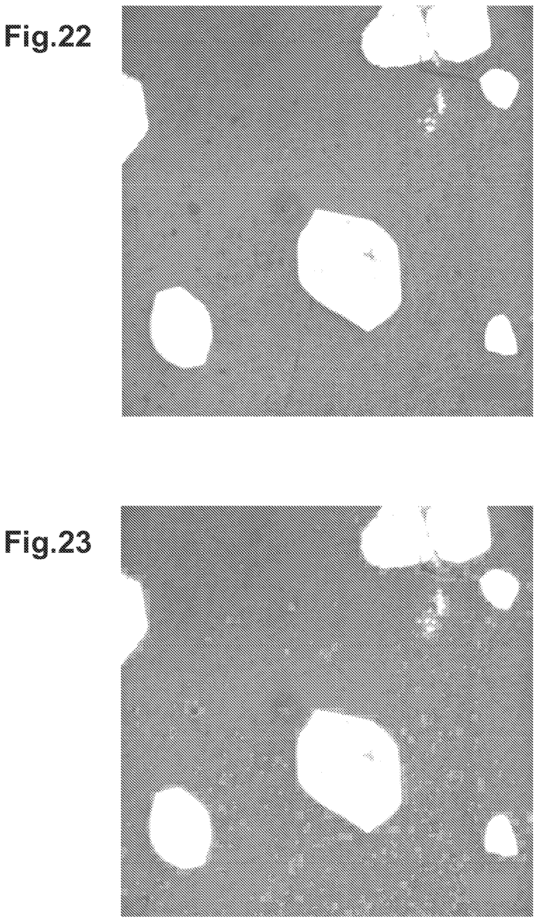

La figure 22 illustre un exemple expérimental d'image vidéo d'une zone d'un échantillon à analyser. L'image structurelle initiale de la figure 22 comprend 472x472 pixels, ces pixels ayant tous les mêmes dimensions. On observe sur cette image originale des particules de taille et de forme variables dispersées sur un fond relativement uniforme.

La figure 22 est numérisée, décomposée en composantes BL, HL, LH, HH jusqu'au niveau 3. Ainsi, on forme des images décomposées d'ordre un BL1, HL1, LH1, HH1 ayant chacune 236x236 pixels. A partir de BL1 on forme des images compressées d'ordre deux BL2, HL2, LH2, HH2 ayant chacune 118x118 pixels. Enfin, A partir de BL2 on forme des images compressées d'ordre trois BL3, HL3, LH3, HH3 ayant chacune 59x59 pixels. Les images décomposées des variations HL, LH, HH, pour les niveaux de décomposition N=1, 2, 3 sont filtrées de manière à supprimer les faibles variations et à les remplacer par des valeurs nulles, formant ainsi des images décomposées filtrées. On déduit des images structurelles décomposées (BL) et filtrées (HL, LH, HH) une pluralité de positions de points de mesure à chaque niveau de décomposition.

L'image de la figure 23 représente l'image structurelle initiale sur laquelle on a superposé, dans une autre couleur, les zones où des détails restent présent après filtrage. Ainsi, la figure 23 met en évidence les zones de l'échantillon où les variations après filtrage sont non nulles pour un ou plusieurs ordres de décomposition.

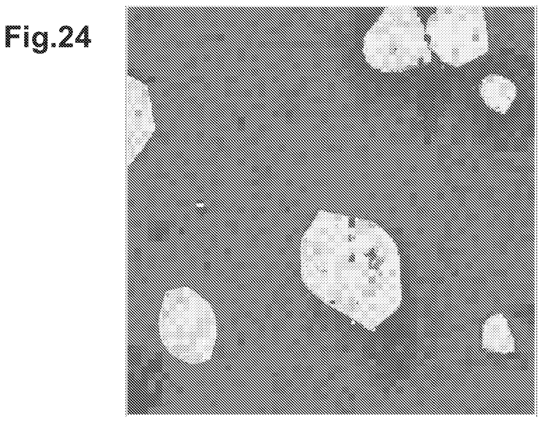

La figure 24 représente l'image de microspectrométrie Raman reconstruite, en appliquant le traitement illustré sur la figure 22 à des mesures de spectrométrie Raman acquises aux points déterminés par l'algorithme de décomposition et filtrage, puis en reconstruisant point par point l'image de microspectrométrie à partir des mesures effectuées. On obtient dans cet exemple un facteur de compression de l'ordre de 20.

Autrement dit, au lieu de faire l'acquisition de 472x472 spectres Raman, on ne fait l'acquisition que de 472x472/20 spectres. Ce facteur de compression se traduit en une réduction de la durée d'acquisition également d'un facteur 20. Ainsi, la durée d'acquisition d'une image de spectrométrie Raman estimée dans cet exemple à 240h pour une image de 472x472 points, est ici ramenée à 12h.

Dans les zones de l'échantillon qui présentent des détails structurels, le procédé de l'invention permet d'appliquer localement une résolution spatiale la plus haute. A l'inverse, dans les zones de l'échantillon relativement uniformes, on applique une acquisition à de plus basse résolution spatiale. On obtient ainsi une image de microspectrométrie Raman multi-échelle. Dans les zones de basse résolution spatiale de l'image reconstruite de microspectrométrie, on peut ensuite aisément interpoler numériquement afin d'obtenir une image de spectrométrie de grain uniforme.

## Revendications

1. Procédé d'acquisition et de formation d'une image de spectrométrie (Pict) d'un échantillon (1), comprenant les étapes suivantes :

   a) acquisition numérique d'une image structurelle initiale (IMO) d'une zone (4) de l'échantillon (1), l'image structurelle initiale (IMO) comportant des pixels disposés en lignes et en colonnes ;
   b) traitement numérique de l'image structurelle initiale (IMO) pour décomposer ladite image structurelle initiale (IMO) en au moins un premier bloc de pixels associé à un premier pas d'échantillonnage spatial et un deuxième bloc de pixels associé à un deuxième pas d'échantillonnage spatial, le premier pas d'échantillonnage spatial étant supérieur au deuxième pas d'échantillonnage spatial, de manière à déterminer un échantillonnage spatial multi-échelle de ladite zone (4) de l'échantillon (1) ;
   c) détermination d'une pluralité de positions de mesure de spectrométrie (Xi, Yj) sur ladite zone (4) de l'échantillon, en fonction de l'échantillonnage spatial multi-échelle déterminé à l'étape b) ;
   d) successivement, pour chaque position de mesure de spectrométrie (Xi, Yj) de la pluralité de positions de mesure de spectrométrie déterminées à l'étape c), positionnement d'un faisceau d'excitation en une position de mesure de spectrométrie (Xi, Yj) et acquisition d'une mesure de spectrométrie pour ladite position de mesure de spectrométrie (Xi, Yj) ;
   e) reconstruction point par point d'une image de spectrométrie (Pict), chaque point de l'image de spectrométrie (Pict) reconstruite étant obtenu à partir d'une ou plusieurs mesures de spectrométrie acquises à l'étape d).

2. Procédé selon la revendication 1, dans lequel l'étape b) comprend une étape de décomposition en ondelettes de l'image structurelle initiale (IM0), ou une étape de recherche de contours dans l'image structurelle initiale (IMO) ou une étape de recherche de formes dans l'image structurelle initiale (IM0).

3. Procédé selon la revendication 2, dans lequel l'étape b) comprend une étape b1) de décomposition en ondelettes de l'image structurelle initiale (IMO) en une première, deuxième, troisième et quatrième composantes d'ordre un (BL1, HL1, LH1, HH1), chaque composante d'ordre un (BL1, HL1, LH1, HH1) ayant un nombre de pixels égal au quart du nombre de pixels de l'image structurelle initiale (IM0), la première composante d'ordre un représentant les basses fréquences spatiales de l'image structurelle initiale (IM0), la deuxième composante d'ordre un (HL1) représentant les variations horizontales de l'image structurelle initiale (IM0), la troisième composante d'ordre un (LH1) représentant les variations verticales de l'image structurelle initiale (IMO) et la quatrième composante d'ordre un (HH1) représentant les variations diagonales de l'image structurelle initiale (IM0), et une étape de filtrage de la deuxième, et respectivement troisième, quatrième, composante d'ordre un (HL1, LH1, HH1) par seuillage des variations, pour former une deuxième, et respectivement troisième, quatrième, composante filtrée d'ordre un,

- l'étape c) comprend une étape c1) de détermination d'une pluralité de positions de mesure de spectrométrie $(X_i, Y_j)$ sur ladite zone (4) de l'échantillon, en fonction des valeurs des deuxième, troisième et quatrième composantes filtrées d'ordre un déterminées à l'étape b1) ; et
- dans lequel à l'étape e) chaque point de l'image de spectrométrie (Pict) reconstruite est obtenu par une combinaison linéaire des mesures de spectrométrie acquises à l'étape d).

4. Procédé selon la revendication 3 comprenant les étapes supplémentaires suivantes, suite à l'étape b1) de décomposition de l'image structurelle initiale (IMO) en une première, deuxième, troisième et quatrième composantes (BL1, HL1, LH1, HH1) d'ordre un et avant l'étape d) de mesure de spectrométrie et l'étape e) de reconstruction, dans lequel les étapes bN) à cN) sont itérées de 2 à N, et dans lequel les étapes dN) à eN) sont itérées de N à 2 où N représente un nombre entier naturel supérieur ou égal à deux et inférieur ou égal à m pour une image structurelle initiale (IMO) de $2^m$ x $2^m$ pixels :

bN) décomposition de la première composante d'ordre N-1 (BL[N-1]) en une première, deuxième, troisième et quatrième composantes d'ordre N (BLN, HLN, LHN, HHN), la première composante d'ordre N (BLN) représentant les basses fréquences spatiales de la première composante d'ordre N-1 (BL[N-1]), la deuxième composante d'ordre N (HLN) représentant les variations horizontales de la première composante d'ordre N-1 (BL[N-1]), la troisième composante d'ordre N (LHN) représentant les variations verticales de la première composante d'ordre N-1 (BL[N-1]) et la quatrième composante d'ordre N (HHN) représentant les variations diagonales de la première composante d'ordre N-1 (BL[N-1]), et filtrage de la deuxième, et respectivement troisième, quatrième, composante d'ordre N (HLN, LHN, HHN) par seuillage, pour former une deuxième, et respectivement troisième, quatrième, composante filtrée d'ordre N ;
cN) détermination d'une pluralité de positions (X, Y) de mesures de spectrométrie d'ordre N sur ladite zone (4) de l'échantillon, en fonction des valeurs des première, deuxième, troisième et quatrième composantes images filtrées d'ordre N ;
dN) pour chaque position de mesure de spectrométrie $(X_i, Y_j)$ de la pluralité de positions de mesure de spectrométrie d'ordre N déterminées à l'étape cN), positionnement du faisceau d'excitation en une position de mesure de spectrométrie $(X_i, Y_j)$ d'ordre N et acquisition d'une mesure de spectrométrie pour ladite position de mesure de spectrométrie $(X_i, Y_j)$ d'ordre N ;
eN) reconstruction à l'ordre N-1 d'une image de spectrométrie, chaque point de l'image de spectrométrie reconstruite à l'ordre N-1 étant obtenu par une combinaison linéaire des mesures de spectrométrie acquises à l'étape dN).

5. Procédé selon l'une des revendications 3 à 4, dans lequel à l'étape b1), respectivement bN), chaque pixel (BL1 (i, j), ..., BLN(i, j)) de la première composante d'ordre un, respectivement d'ordre N, est formé par moyenne de quatre pixels adjacents de l'image structurelle initiale (IM0), respectivement par fusion de quatre pixels adjacents de la première composante d'ordre N-1, les quatre pixels adjacents étant disposés sur deux lignes et deux colonnes de l'image structurelle initiale (IM0), respectivement de la première composante d'ordre N-1.

6. Procédé selon l'une des revendications 1 à 5 dans lequel l'étape b) respectivement bN), de filtrage comporte une étape de mise à zéro de la valeur d'un pixel de ladite deuxième, respectivement troisième, quatrième, composante d'ordre un (HL1, LH1, HH1), respectivement d'ordre N, lorsque la valeur dudit pixel est inférieure ou égale à une valeur de seuil prédéterminée.

7. Procédé selon l'une des revendications 1 à 6 comprenant une étape supplémentaire f), respectivement fN), suite à l'étape d), respectivement dN) et avant l'étape e), respectivement eN), dans lequel l'étape f), respectivement fN), comprend la reconstruction d'une première, deuxième, troisième et quatrième image décomposée de spectrométrie d'ordre un, respectivement d'ordre N, ladite première, deuxième, troisième et quatrième image décomposée de spectrométrie d'ordre un, respectivement d'ordre N ayant un nombre de points égal au nombre de pixels de ladite première, deuxième, troisième et quatrième image structurelle décomposée filtrée d'ordre un, respectivement d'ordre N, et dans lequel chaque pixel de valeur nulle de la deuxième, respectivement troisième, quatrième image structurelle décomposée filtrée d'ordre un, respectivement d'ordre N est associé à un point de valeur nulle de la deuxième, respectivement troisième, quatrième image décomposée de spectrométrie d'ordre un, respectivement d'ordre N, et dans lequel les valeurs des autres points des images décomposées de spectrométrie d'ordre un, respectivement d'ordre N sont calculées pour chaque autre point par une combinaison linéaire d'au plus quatre mesures de spectrométrie d'ordre un, respectivement d'ordre N obtenues à l'étape d), respectivement dN), et dans lequel l'étape e), respectivement eN), de reconstruction de l'image de spectrométrie (Pict), respectivement d'ordre N-1, comporte une étape de calcul par combinaisons linéaires des première, deuxième, troisième et quatrième image décomposée de spectrométrie d'ordre un, respectivement d'ordre N.

8. Procédé selon l'une des revendications 1 à 7, dans lequel l'étape d), respectivement dN), comprend l'acquisition de mesures de spectrométrie Raman ou de fluorescence optique ou de photoluminescence par balayage de faisceau laser et dans lequel l'étape e), respectivement eN), comprend la reconstruction d'une image de spectrométrie Raman ou de fluorescence optique ou de photoluminescence.

9. Procédé selon l'une des revendications 1 à 7, dans lequel l'étape d) respectivement dN), comprend l'acquisition de mesures de cathodo-luminescence ou de fluorescence de rayons X, par balayage de faisceau électronique et dans lequel l'étape e), respectivement eN), comprend la reconstruction d'une image de cathodo-luminescence ou, respectivement de fluorescence de rayons X.

10. Procédé selon l'une des revendications 1 à 7, dans lequel l'étape d) respectivement dN), comprend l'acquisition de mesures de fluorescence de rayons X, par balayage de faisceau de rayons X et dans lequel l'étape e), respectivement eN), comprend la reconstruction d'une image de fluorescence de rayons X.

11. Procédé selon l'une des revendications 1 à 10 dans lequel l'étape a) comprend une étape de détection d'une image structurelle de l'échantillon sur un capteur d'image, ou une étape de récupération d'un fichier image de l'échantillon sur un autre instrument de métrologie ou une étape de chargement d'un fichier image à partir d'une base de données comprenant une image structurelle de l'échantillon et/ou une étape de numérisation d'une image structurelle analogique.

12. Procédé selon l'une des revendications 1 à 11 dans lequel l'étape a) comprend en outre une étape de redimensionnement par agrandissement ou réduction, de façon à ce que la taille des pixels redimensionnés corresponde à une résolution spatiale maximale dans l'imagerie de spectrométrie (Pict) reconstruite.

**Patentansprüche**

1. Verfahren zur Erfassung und Herstellung eines Spektrometriebilds (Pict) einer Probe (1) mit den folgenden Schritten:

   a) digitale Erfassung eines strukturellen Ausgangsbilds (IMO) einer Zone (4) der Probe (1), wobei das strukturelle Ausgangsbild (IMO) in Zeilen und Spalten angeordnete Pixel aufweist;
   b) digitale Verarbeitung des strukturellen Ausgangsbilds (IMO), um das strukturelle Ausgangsbild (IMO) mindestens in einen ersten, einem ersten räumlichen Abtastschritt zugeordneten Pixelblock und einen zweiten, einem zweiten räumlichen Abtastschritt zugeordneten Pixelblock zu zerlegen, wobei der erste räumliche Abtastschritt größer als der zweite räumliche Abtastschritt ist, um eine räumliche Abtastung der Zone (4) der Probe (1) mit mehreren Maßstäben zu bestimmen;
   c) Bestimmung einer Anzahl Spektroskopiemeßpositionen (Xi, Yj) auf der Zone (4) der Probe in Abhängigkeit von der im Schritt b) bestimmten räumlichen Abtastung mit mehreren Maßstäben;
   d) nacheinander, für jede Spektroskopiemeßposition (Xi, Yj) der im Schritt c) bestimmten Anzahl Spektrometriemeßpositionen, Positionierung eines Erregerstrahls auf einer Spektrometriemeßposition (Xi, Yj) und Erfassung einer Spektrometriemessung für die Spektrometriemeßposition (Xi, Yj);
   e) punktweise Rekonstruktion eines Spektrometriebilds (Pict), wobei jeder Punkt des rekonstruierten Spektrometriebilds (Pict) aus einer oder mehreren der im Schritt d) erfaßten Spektrometriemessungen erhalten wird.

2. Verfahren gemäß Anspruch 1, bei dem der Schritt b) einen Schritt der Zerlegung des strukturellen Ausgangsbilds (IMO) in Wavelets oder einen Schritt des Suchens von Konturen im strukturellen Ausgangsbild (IMO) oder einen Schritt des Suchens von Formen im strukturellen Ausgangsbild (IMO) aufweist.

3. Verfahren gemäß Anspruch 2, bei dem der Schritt b) einen Schritt b1) der Zerlegung des strukturellen Ausgangsbilds (IMO) in Wavelets in eine erste, zweite, dritte und vierte Komponente der Ordnung Eins (BL1, HL1, LH1, HH1) aufweist, wobei jede Komponente der Ordnung Eins (BL1, HL1, LH1, HH1) eine Anzahl Pixel aufweist, die gleich einem Viertel der Anzahl Pixel des strukturellen Ausgangsbilds (IMO) ist, wobei die erste Komponente der Ordnung Eins die tiefen Raumfrequenzen des strukturellen Ausgangsbilds (IMO) darstellt, die zweite Komponente der Ordnung Eins (HL1) die horizontalen Variationen des strukturellen Ausgangsbilds (IMO) darstellt, die dritte Komponente der Ordnung Eins (LH1) die vertikalen Variationen des strukturellen Ausgangsbilds (IMO) darstellt und die vierte Komponente der Ordnung Eins (HH1) die diagonalen Variationen des strukturellen Ausgangsbilds (IMO) darstellt, und einen Schritt des Filtems der zweiten beziehungsweise der dritten oder vierten Komponente der Ordnung Eins (HL1, LH1, HH1) durch ein Schwellenwertverfahren der Variationen aufweist, um eine zweite, beziehungsweise dritte der vierte gefilterte Komponente der Ordnung Eins zu bilden,

- bei dem der Schritt c) einen Schritt c1) der Bestimmung einer Anzahl Spektrometriemeßpositionen (Xi, Yj) auf der Zone (4) der Probe (1) in Abhängigkeit von den im Schritt b1) bestimmten Werten der zweiten, dritten und vierten gefilterten Komponenten der Ordnung Eins aufweist und
- bei dem im Schritt e) jeder Punkt des rekonstruierten Spektrometriebilds (Pict) durch eine lineare Kombination der im Schritt d) erfaßten Spektrometriemessungen erhalten wird.

4. Verfahren gemäß Anspruch 3 mit den folgenden zusätzlichen Schritten nach dem Schritt b1) der Zerlegung des strukturellen Ausgangsbilds (IMO) in eine erste, zweite, dritte und vierte Komponente (BL1, HL1, LH1, HH1) der Ordnung Eins und vor dem Schritt d) der Spektrometriemessung und dem Schritt e) der Rekonstruktion, wobei die Schritte bN) bis cN) von 2 bis N wiederholt werden und wobei die Schritte dN bis eN) von N bis 2 wiederholt werden, wobei N eine natürliche ganze Zahl größer als oder gleich zwei und kleiner als oder gleich m für ein strukturelles Ausgangsbild (IMO) mit $2^m$ x $2^m$ Pixeln ist:

bN) Zerlegung der ersten Komponente der Ordnung N-1 (BL[N-1]) in eine erste, zweite, dritte und vierte Komponente der Ordnung N (BLN, HLN, LHN, HHN), wobei die erste Komponente der Ordnung N (BLN) die tiefen räumlichen Frequenzen der ersten Komponente der Ordnung N-1 (BL[N-1]) darstellt, die zweite Komponente der Ordnung N (HLN) die horizontalen Variationen der ersten Komponente der Ordnung N-1 (BL[N-1]) darstellt, die dritte Komponente der Ordnung N (LHN) die vertikalen Variationen der ersten Komponente der Ordnung N-1 (BL[N-1]) darstellt und die vierte Komponente der Ordnung N (HHN) die diagonalen Variationen der ersten Komponente der Ordnung N-1 (BL[N-1]) darstellt, und Filterung der zweiten beziehungsweise dritten oder vierten Komponente der Ordnung N (HLN, LHN, HHN) durch ein Schwellenwertverfahren, um eine zweite beziehungsweise dritte oder vierte gefilterte Komponente der Ordnung N zu bilden;
cN) Bestimmung einer Anzahl Spektroskopiemeßpositionen (Xi, Yj) der Ordnung N auf der Zone (4) der Probe in Abhängigkeit von den Werten der ersten, zweiten, dritten, vierten gefilterten Bildkomponenten der Ordnung N;
dN) für jede Spektroskopiemeßposition (Xi, Yj) der im Schritt cN) bestimmten Anzahl Spektrometriemeßpositionen der Ordnung N, Positionierung des Erregerstrahls auf einer Spektrometriemeßposition (Xi, Yj) der Ordnung N und Erfassung einer Spektrometriemessung für die Spektrometriemeßposition (Xi, Yj) der Ordnung N;
eN) Rekonstruktion in der Ordnung N-1 eines Spektrometriebilds, wobei jeder Punkt des in der Ordnung N-1 rekonstruierten Spektrometriebilds durch eine lineare Kombination der im Schritt dN) erfaßten Spektrometriemessungen erhalten wird.

5. Verfahren gemäß einem der Ansprüche 3 bis 4, bei dem im Schritt b1) beziehungsweise bN) jedes Pixel (BL1(i, j), ..., BLN(i, j)) der ersten Komponente der Ordnung Eins beziehungsweise der Ordnung N aus dem Mittelwert von vier aneinandergrenzenden Pixeln des strukturierten Ausgangsbilds (IMO) beziehungsweise durch Fusion von vier aneinandergrenzenden Pixeln der ersten Komponente der Ordnung N-1 gebildet wird, wobei die vier aneinandergrenzenden Pixel auf zwei Zeilen und zwei Spalten des strukturierten Ausgangsbilds (IMO) beziehungsweise der ersten Komponente der Ordnung N-1 angeordnet sind.

6. Verfahren gemäß einem der Ansprüche 1 bis 5, bei dem der Schritt b) beziehungsweise bN) der Filterung einen Schritt der Nullsetzung des Werts eines Pixels der zweiten beziehungsweise dritten oder vierten Komponente der Ordnung Eins (HL1, LH1, HH1) beziehungsweise der Ordnung N aufweist, wenn der Wert des Pixels kleiner als oder gleich einem vorbestimmten Schwellenwert ist.

7. Verfahren gemäß einem der Ansprüche 1 bis 6 mit einem zusätzlichen Schritt f) beziehungsweise fN) nach dem Schritt d) beziehungsweise dN) und vor dem Schritt e) beziehungsweise eN), bei dem der Schritt f) beziehungsweise fN) die Rekonstruktion eines ersten, zweiten, dritten und vierten zerlegten Spektrometriebilds der Ordnung Eins beziehungsweise der Ordnung N aufweist, wobei das erste, zweite, dritte und vierte zerlegte Spektrometriebild der Ordnung Eins beziehungsweise der Ordnung N eine Anzahl Punkte gleich der Anzahl Pixel des ersten, zweiten, dritten und vierten gefilterten zerlegten strukturellen Bilds der Ordnung Eins beziehungsweise der Ordnung N aufweist und wobei jedes Pixel mit dem Wert Null des zweiten beziehungsweise dritten oder vierten gefilterten zerlegten strukturellen Bilds der Ordnung Eins beziehungsweise der Ordnung N einem Punkt mit dem Wert Null des zweiten beziehungsweise dritten oder vierten gefilterten zerlegten strukturellen Bilds der Ordnung Eins beziehungsweise der Ordnung N zugeordnet ist und bei dem die Werte der anderen Punkte der zerlegten Spektrometriebilder der Ordnung Eins beziehungsweise der Ordnung N für jeden anderen Punkt durch eine lineare Kombination von höchstens vier im Schritt d) beziehungsweise dN) erhaltenen Spektrometriemessungen der Ordnung Eins beziehungsweise der Ordnung N errechnet werden und bei dem der Schritt e) beziehungsweise eN) der Rekonstruktion des Spektrometriebilds (Pict) der Ordnung Eins beziehungsweise der Ordnung N-1 einen Schritt des Berechnens durch lineare Kombinationen des ersten, zweiten, dritten und vierten zerlegten Spektrometriebilds der Ordnung Eins beziehungsweise der Ordnung N aufweist.

8. Verfahren gemäß einem der Ansprüche 1 bis 7, bei dem der Schritt d) beziehungsweise dN) die Erfassung von Messungen der Raman-Spektrometrie oder der optischen Fluoreszenz oder der Photolumineszenz durch Laserstrahlabtastung aufweist und bei dem der Schritt e) beziehungsweise eN) die Rekonstruktion eines Bilds der Raman-Spektrometrie oder der optischen Fluoreszenz oder der Photolumineszenz aufweist.

9. Verfahren gemäß einem der Ansprüche 1 bis 7, bei dem der Schritt d) beziehungsweise dN) die Erfassung von Messungen der Kathodolumineszenz oder der Fluoreszenz durch Röntgenstrahlen durch elektronische Strahlabtastung aufweist und bei dem der Schritt e) beziehungsweise eN) die Rekonstruktion eines Kathodolumineszenzbilds beziehungsweise eines Röntgenstrahlfluoreszenzbilds aufweist.

10. Verfahren gemäß einem der Ansprüche 1 bis 7, bei dem der Schritt d) beziehungsweise dN) das Erfassung von Röntgenstrahlfluoreszenzmessungen durch Röntgenstrahlabtastung aufweist und bei dem der Schritt e) beziehungsweise eN) die Rekonstruktion eines Röntgenstrahlfluoreszenzbilds aufweist.

11. Verfahren gemäß einem der Ansprüche 1 bis 10, bei dem der Schritt a) einen Schritt des Erkennens eines strukturellen Bilds der Probe auf einem Bildsensor oder einen Schritt des Übernehmens einer Bilddatei der Probe von einem anderen Meßgerät oder einen Schritt des Herunterladens einer Bilddatei von einer Datenbank, die ein strukturelles Bild der Probe aufweist, und/oder einen Schritt der Digitalisierung eines analogen strukturellen Bilds aufweist.

12. Verfahren gemäß einem der Ansprüche 1 bis 11, bei dem der Schritt a) außerdem einen Schritt der Neudimensionierung durch Vergrößerung oder Verkleinerung aufweist, so daß die Größe der neudimensionierten Pixel einer maximalen räumlichen Auflösung bei rekonstruierten Spektrometriebildern (Pict) entspricht.

## Claims

1. A method for acquiring and forming a spectrometry image (Pict) of a sample (1), comprising the following steps:

   a) digitally acquiring an initial structural image (IMO) of an area (4) of the sample (1), the initial structural image (IMO) including pixels arranged into lines and columns;
   b) digitally processing the initial structural image (IMO) to decompose said initial structural image (IMO) into at least one first block of pixels associated with a first spatial sampling pitch and a second block of pixels associated with a second spatial sampling pitch, the first spatial sampling pitch being higher than the second spatial sampling pitch, so as to determine a multi-scale spatial sampling of said area (4) of the sample (1);
   c) determining a plurality of spectrometry measurement positions (Xi, Yj) in said area (4) of the sample, as a function of the multi-scale spatial sampling determined at step b);
   d) successively, for each spectrometry measurement position (Xi, Yj) of the plurality of spectrometry measurement positions determined at step c), positioning an excitation beam at a spectrometry measurement position (Xi, Yj) and acquiring a spectrometry measurement for said spectrometry measurement position (Xi, Yj);

e) reconstructing a spectrometry image (Pict) point by point, each point of the reconstructed spectrometry image (Pict) being obtained from one or several spectrometry measurements acquired at step d).

2. The method according to claim 1, wherein step b) comprises a step of decomposing the initial structural image (IMO) into wavelets, or a step of searching for outlines in the initial structural image (IMO) or a step of searching for forms in the initial structural image (IM0).

3. The method according to claim 2, wherein step b) comprises a step b1) of decomposing the initial structural image (IMO) into wavelets into a first, second, third and fourth components of order 1 (BL1, HL1, LH1, HH1), each component of order 1 (BL1, HL1, LH1, HH1) having a number of pixels equal to one quarter of the number of pixels of the initial structure image (IM0), the first component of order 1 representing the low spatial frequencies of the initial structural image (IM0), the second component of order 1 (HL1) representing the horizontal variations of the initial structure image (IM0), the third component of order 1 (LH1) representing the vertical variations of the initial structural image (IM0), and the fourth component of order 1 (HH1) representing the diagonal variations of the initial structural image (IM0), and a step of filtering the second, and respectively third, fourth, component of order 1 (HL1, LH1, HH1) by thresholding of the variations, to form a second, and respectively third, fourth, filtered component of order 1,

- step c) comprises a step c1) of determining a plurality of spectrometry measurement positions (Xi, Yj) in said area (4) of the sample, as a function of the values of the second, third and fourth filtered components of order 1 determined at step b1); and

- at step e), each point of the reconstructed spectrometry image (Pict) is obtained by a linear combination of the spectrometry measurements acquired at step d).

4. The method according to claim 3, comprising the following additional steps after step b1) of decomposing the initial structural image (IMO) into a first, second, third and fourth components (BL1, HL1, LH1, HH1) of order 1 and before step d) of spectrometry measurement and step e) of reconstruction, wherein steps bN) to cN) are iterated from 2 to N, and wherein steps dN) to eN) are iterated from N to 2, where N represents a natural integer higher than or equal to two and lower than or equal to m for an initial structural image (IMO) of $2^m$ x $2^m$ pixels:

bN) decomposing the first component of order N-1 (BL[N-1]) into a first, second, third and fourth components of order N (BLN, HLN, LHN, HHN), the first component of order N (BLN) representing the low spatial frequencies of the first component of order N-1 (BL[N-1]), the second component of order N (HLN) representing the horizontal variations of the first component of order N-1(BL[N-1]), the third component of order N (LHN) representing the vertical variations of the first component of order N-1 (BL[N-1]) and the fourth component of order N (HHN) representing the diagonal variations of the first component of order N-1 (BL[N-1]), and filtering the second, and respectively third, fourth, component of order N (HLN, LHN, HHN) by thresholding, to form a second, and respectively third, fourth, filtered component of order N;

cN) determining a plurality of positions (X, Y) of spectrometry measurements of order N in said area (4) of the sample, as a function of the values of the first, second, third and fourth filtered image components of order N;

dN) for each spectrometry measurement position (Xi, Yj) of the plurality of positions of spectrometry measurements of order N determined at step cN), positioning the excitation beam to a position of spectrometry measurement (Xi, Yj) of order N and acquiring a spectrometry measurement for said position of spectrometry measurement (Xi, Yj) of order N;

eN) reconstructing a spectrometry image at order N-1, each point of the spectrometry image reconstructed at order N-1 being obtained by a linear combination of the spectrometry measurements acquired at step dN).

5. The method according to one of claims 3 to 4, wherein, at step b1), respectively bN), each pixel (BL1 (i, j), ..., BLN(i, j)) of the first component of order 1, respectively of order N, is formed by averaging four adjacent pixels of the initial structural image (IM0), respectively by merging four adjacent pixels of the first component of order N-1, the four adjacent pixels being arranged on two lines and two columns of the initial structural image (IM0), respectively of the first component of order N-1.

6. The method according to one of claims 1 to 5, wherein step b), respectively bN), of filtering includes a step of resetting to zero the value of one pixel of said second, respectively third, fourth, component of order 1 (HL1, LH1, HH1), respectively of order N, when the value of said pixel is lower than or equal to a predetermined threshold value.

7. The method according to one of claims 1 to 6, comprising an additional step f), respectively fN), after step d), respectively dN), and before step e), respectively eN), wherein step f), respectively fN), comprises reconstructing a first, second, third and fourth decomposed spectrometry image of order 1, respectively of order N, said first, second, third and fourth decomposed spectrometry image of order 1, respectively of order N, having a number of points equal to the number of pixels of said first, second, third and fourth filtered decomposed structural image of order 1, respectively of order N, and wherein each pixel of null value of the second, respectively third, fourth, filtered decomposed structural image of order 1, respectively of order N, is associated with a point of null value of the second, respectively third, fourth, decomposed spectrometry image of order 1, respectively of order N, and wherein the values of the other points of the decomposed spectrometry images of order 1, respectively of order N, are calculated for each other point by a linear combination of at most four spectrometry measurements of order 1, respectively of order N, obtained at step d), respectively dN), and wherein step e), respectively eN), of reconstructing the spectrometry image (Pict), respectively of order N-1, includes a step of calculating by linear combinations the first, second, third and fourth decomposed spectrometry images of order 1, respectively of order N.

8. The method according to one of claims 1 to 7, wherein step d), respectively dN), comprises acquiring Raman or optical fluorescence or photoluminescence spectrometry measurements by laser beam scanning, and wherein step e), respectively eN), comprises the reconstruction of a Raman or optical fluorescence or photoluminescence spectrometry image.

9. The method according to one of claims 1 to 7, wherein step d), respectively dN), comprises acquiring cathodoluminescence or X-ray fluorescence measurements, by electronic beam scanning, and step e), respectively eN), comprises reconstructing a cathodoluminescence, or respectively an X-ray fluorescence, image.

10. The method according to one of claims 1 to 7, wherein step d), respectively dN), comprises acquiring X-ray fluorescence measurements, by X-ray beam scanning, and wherein step e), respectively eN), comprises reconstructing an X-ray fluorescence image.

11. The method according to one of claims 1 to 10, wherein step a) comprises a step of detecting a structural image of the sample on an image sensor, or a step of recovering an image file of the sample on another metrology instrument or a step of downloading an image file from a data base comprising a structural image of the sample and/or a step of digitizing an analog structural image.

12. The method according to one of claims 1 to 11, wherein step a) further comprises a step of size increase or decrease, so that the size of the resized pixels correspond to a maximum spatial resolution in the reconstructed spectrometry imaging (Pict).

**Fig.1**
Art ant.

**Fig.2**
Art ant.

**Fig.3A**

**Fig.3B**

**Fig.4**

## Fig.5A

| 10 | 1 | 50 | 24 |
|----|---|----|----|
| 5 | 3 | 3 | 62 |
| 7 | 8 | 9 | 2 |
| 1 | 0 | 15 | 1 |

LH1

## Fig.5B

LHF1

| 10 | 1 | 50 | 24 |
|----|---|----|----|
| 5 | 3 | 3 | 62 |
| 7 | 8 | 9 | 2 |
| 1 | 0 | 15 | 1 |

## Fig.6A

IM0

| A | B | E | F | | | | |
|---|---|---|---|---|---|---|---|
| C | D | G | H | | | | |
| I | J | | | | | | |
| K | L | | | | | | |
| | | | | | | | |
| | | | | | | | |
| | | | | | | | |
| | | | | | | | |

## Fig.6B

BL1  HLF1

LHF1  HHF1

## Fig.7

BL2  HLF2  HLF1

LHF2

HHF2

HHF1

LHF1

## Fig.8

| A | B |
|---|---|
| C | D |

# Fig.9

# Fig.10

# Fig.11

# Fig.12

# Fig.13

# Fig.14

# Fig.15

# Fig.16

## Fig.17

## Fig.18

## Fig.19

## Fig.20

## Fig.21

Fig.22

Fig.23

Fig.24

## RÉFÉRENCES CITÉES DANS LA DESCRIPTION

**Documents brevets cités dans la description**

- EP 1983332 A
- WO 2010069987 A
- US 2005128476 A
- JP 2001091848 A